# EUROPEAN PATENT SPECIFICATION

(11) **EP 3 693 911 B1**
(45) Date of publication and mention of the grant of the patent: **13.09.2023**
(21) Application number: 18882735.6
(22) Date of filing: 23.11.2018
(51) Int. Cl.: G06Q 20/34, G06Q 20/32, G06Q 20/22, G06Q 20/02, G06Q 20/36

(54) **CARD LINKING METHOD AND TERMINAL**
VERFAHREN UND ENDGERÄT ZUR VERKNÜPFUNG VON KARTEN
PROCÉDÉ ET TERMINAL DE LIAISON DE CARTE

(30) Priority: 29.11.2017 CN 201711227577; 08.01.2018 CN 201810016329
(43) Date of publication of application: 12.08.2020
(60) Divisional application: 23183519.0
(73) Proprietor: Huawei Technologies Co., Ltd., Longgang District Shenzhen, Guangdong 518129 (CN)
(72) Inventor: DING, Jianxin, Shenzhen Guangdong 518129 (CN); ZHAO, Xiaona, Shenzhen Guangdong 518129 (CN); CHANG, Xinmiao, Shenzhen Guangdong 518129 (CN)
(74) Representative: Thun, Clemens
(86) International application number: PCT/CN2018/117178
(87) International publication number: WO 2019/105296

(56) References cited:
- EP-A1- 1 569 405
- WO-A1-2017/172430
- CN-A- 101 017 583
- CN-A- 102 184 499
- CN-A- 104 065 639
- CN-A- 104 933 563
- CN-A- 107 146 076
- US-A1- 2009 307 132
- US-A1- 2010 125 495
- US-A1- 2010 125 510
- US-A1- 2013 152 185
- US-A1- 2013 221 092
- US-A1- 2014 279 115
- US-A1- 2015 348 025
- US-A1- 2017 032 362

## Description

### TECHNICAL FIELD

This application relates to the field of mobile payment technologies, and in particular, to a card binding method and a terminal.

### BACKGROUND

Mobile payment has been widely used. A user may perform payment by using an application (application, APP) installed on a terminal such as a mobile phone. Common mobile payment APPs (or digital wallet APPs) include digital wallet applications launched by various mobile phone manufacturers such as HUAWEI Wallet and Apple Pay, mobile banking clients and the like launched by financial institutions such as banks, and third-party payment applications launched by third-party payment service suppliers such as WeChat Pay and Alipay.

Currently, after registering account information in a digital wallet, the user adds a bank card to the digital wallet and binds the bank card. Then, the user may use the digital wallet to complete payment. Some digital wallets support two payment manners: online payment and offline payment, for example, HUAWEI Wallet, UnionPay Wallet, and NFC. The online payment is mainly used for online shopping, such as web page payment or in-app payment (in-app payment). When the terminal is connected to a network, the user may perform payment by using a bank card bound to a digital wallet APP. Certainly, if the terminal is not connected to the network, the user may also perform payment such as two-dimensional code payment by using a bank card bound to a digital wallet APP, provided that a payee terminal on a merchant side can be connected to the network. The offline payment is mainly used for card swiping by a point of sale (Point of Sale, POS) terminal. For a terminal that supports an NFC function, even if the terminal is not connected to the network, the user can log in to the terminal to complete payment by using a bank card bound to the digital wallet APP. In other words, the mobile phone is simulated as a bank card for payment.

US 2017/0032362 A1 refers to a method of enrolling a payment card in a mobile wallet app including: receiving, on a mobile device, a request from a user to enroll a financial account in a mobile wallet application installed on the mobile device, sending an enrollment request to a wallet server, the enrollment request including an identification string uniquely associated with the mobile device, receiving a payment token associated with the financial account from the wallet server, and notifying the user that the financial account has been enrolled into the mobile wallet application responsive to receipt of the payment token.

The document US 2014/0279115 A1 shows a mobile payment method and system using cloud computing.

The document US 2010/0125495 A1 shows a system and method of providing a mobile wallet at a mobile telephone.

The document EP 1 569 405 A1 shows a technique for creation and linking of communications network user accounts.

The document WO 2017/172430 A1 shows a system and method for mobile payment.

The document US 2010/0125510 A1 shows a system and method of conducting transactions using a mobile wallet system.

The document US 2013/0221092 A1 shows a system and method of loading a transaction card and processing repayment on a mobile device.

The document US 2013/0152185 A1 shows a system and method for provisioning transactions for mobile wireless communications devices.

The document US 2009/0307132 A1 shows an enhanced user interface for contactless payment functions in mobile telephones.

The document US 2015/0348025 A1 shows an apparatus and method for using a primary user device to provision credentials onto a secondary user device.

In the offline payment manner, currently, when bank cards are to be bound, a corresponding card application needs to be downloaded to the terminal for each bank card; the user needs to perform a series of information input operations, for example, "enter a card number, a mobile phone number, and a card payment password, and set a wallet payment password and a security question" for each to-be-bound bank card; and then personalization of each card application is implemented to complete binding. These card applications and personalization data corresponding to these card applications are locally stored in the terminal. Therefore, if the terminal is changed, the user needs to re-bind cards after logging in to a digital wallet by using an original registered account on a changed terminal. In other words, the user needs to re-download card applications one by one, and re-perform the foregoing series of information input operations one by one. Consequently, the user performs a relatively cumbersome operation in a first-time card binding process, or in a card binding process in which the terminal is changed, and card binding efficiency is relatively low.

### SUMMARY

Embodiments of this application disclose a card binding method and a terminal, to resolve a prior-art problem of relatively low card binding efficiency caused when a terminal is used for NFC payment. This problem is solved by the subject matter of the independent claims. Further implementation forms are provided in the dependent claims.

To achieve the foregoing objective, solutions provided in the embodiments of this application are as follows.

In a first aspect a card binding method performed by a system comprising a terminal, a digital wallet server, a first bank server, and a second bank server is provided, wherein the method comprises the following method steps:
**a.)** displaying, by the terminal, a first screen, wherein the first screen displays two bank cards associated with an account number with which a digital wallet application, APP, is currently logged in to, the two bank cards are bound to other terminals when the user logged in to the account number on the other terminals,
   o wherein the two bank cards are displayed based upon historical card binding information received from the digital wallet server, wherein the historical card binding information is bank card information bound when the user logged in to the account number on the other terminals,
   o wherein the digital wallet application is an application, which is installed in the terminal, and which is used to complete offline payment;
**b.)** determining, by the terminal, a to-be-verified bank card and a to-be-bound bank card from the two bank cards based on a selection of the user or according to a preset rule;
**c.)** displaying, by the terminal, a second screen, wherein the second screen is used to prompt a user to enter verification information of the to-be-verified bank card, wherein the user only needs to enter the verification information of the to-be-verified bank card to complete a binding of the to-be-bound bank card;
**d.)** sending, by the terminal, a first request to the digital wallet server, the first request being used to request the first bank server to perform a verification on the verification information of the to-be-verified bank card and used to request a delivery of a card application and personalization data of the to-be verified bank card to the terminal, wherein the first request carries the verification information, an identifier of the to-be-bound bank card, and an identifier of the to-be-verified bank card,
   ∘ wherein the verification information is used to determine at the first bank server whether the to-be-verified bank card is a valid card, and the verification information is a bank name, a card number, a registered mobile number, a withdrawal password, or a security question setting,
   ∘ wherein the personalization data of the to-be-verified bank card includes privacy data related to the card application of the to-be-verified bank card, and
   ∘ wherein the identifier of the to-be-bound bank card is used to identify the second bank server and the identifier of the to-be-verified bank card is used to identify the first bank server;
**e.)** sending, by the digital wallet server, based on the identifier of the to-be-verified bank card, a second request to the first bank server, the second request including the verification information, wherein the second request is used to request the first bank server to perform the verification on the verification information of the to-be-verified bank card and is used to request the delivery of the card application and the personalization data of the to-be-verified bank card to the terminal;
**f.)** performing, by the first bank server, the verification based on the verification information, and delivering, by the first bank server, the card application and the personalization data of the to-be-verified band card to the digital wallet server after the verification performed on the verification information succeeds, wherein the personalization data carry, as a part of the personalization data, a mutual trust credential generated by the first bank server;
**g.)** receiving, by the terminal, from the digital wallet server the card application and the personalization data of the to-be-verified bank card, and installing, by the terminal, the card application of the to-be-verified bank card in a secure area of the terminal, and binding, by the terminal, the to-be-verified bank card to the terminal based on the installed card application and the privacy data related to the card application of the to-be-verified bank card;
**h.)** after the binding of the to-be-verified bank card to the terminal is completed, sending, by the terminal, a third request to the digital wallet server, the third request being used to request the second bank server to deliver a card application and personalization data of the to-be-bound bank card to the terminal, wherein the third request includes the mutual trust credential, wherein the personalization data of the to-be-bound bank card includes privacy data related to the card application of the to-be-bound bank card;
**i.)** sending, by the digital wallet server, based on the identifier of the to-be-bound bank card, a fourth request to the second bank server, wherein the fourth request carries the mutual trust credential and the identifier of the to-be-verified bank card, wherein the fourth request is used to request the second bank server to deliver the card application and the personalization data of the to-be-bound band card;
**j.)** sending, by the second bank server, based on the identifier of the to-be-verified bank card, a fifth request to the first bank server, the fifth request containing the mutual trust credential and the fifth request is used to request a verification of the mutual trust credential contained in the fifth request;
**k.)** verifying, by the first bank server, the mutual trust credential contained in the fifth request by determining whether the mutual trust credential contained in the fifth request is the same as the mutual trust credential previously delivered to the digital wallet server, and if the verification succeeds, sending, by the first bank server, a verification success message of the successful verification of the mutual trust credential to the second bank server;
**l.)** after the reception of the verification success message, delivering, by the second bank server, the card application and the personalization data of the to-be-bound bank card to the digital wallet server;
**m.)** receiving, by the terminal, from the digital wallet server the card application and the personalization data of the to-be-bound bank card, and installing, by the terminal, the card application in the secure area of the terminal, and binding, by the terminal, the to-be-bound bank card to the terminal based on the installed card application and the privacy data related to the card application of the to-be-bound bank card.

In a first implementation form of the first aspect, before the displaying the first screen, the method further comprises:
∘ receiving, by the terminal, a trigger operation entered by the user by using the digital wallet APP, wherein the trigger operation comprises a login operation entered by the user on a login screen of the digital wallet APP, or an operation that is of adding the to-be-bound bank card and that is entered through a preset entry after the user successfully logs in to the digital wallet APP.

Ini a second implementation form of the first aspect the determining the to-be-verified bank card and the to-be-bound bank card from the two bank cards comprises:
∘ determining the to-be-verified bank card and the to-be-bound bank card from the two bank cards based on a selection operation of the user; or
∘ determining the to-be-verified bank card and the to-be-bound bank card from the two bank cards according to a preset rule, wherein the preset rule comprises: determining that a bank card whose quantity of historical usage times is greater than a preset threshold is the to-be-verified bank card, or determining that any one of the two bank cards is the to-be-verified bank card.

In a third implementation form of the first aspect the method further comprises:
∘ displaying an installation progress of the card application of the to-be-bound bank card.

In a fourth implementation form of the first aspect, before the two bank cards associated with the account number with which the digital wallet APP is currently logged in to are displayed, the method further comprises:
o determining the two bank cards associated with the account number with which the digital wallet APP is currently logged in to.

In a fifth implementation form of the first aspect the determining the two bank cards associated with the account number with which the digital wallet APP is currently logged in to comprises:
∘ obtaining a first historical card binding record associated with the account number; and
∘ if a second historical card binding record associated with the account number is obtained, determining that bank cards corresponding to identifiers of card applications that are not comprised in the second historical card binding record, but are comprised in the first historical card binding record, are the two bank cards; or
   if the second historical card binding record is not obtained, determining that bank cards corresponding to identifiers of card applications in the first historical card binding record are the two bank cards, wherein
   the first historical card binding record comprises identifiers of all card applications associated with the account number, and the second historical card binding record comprises an identifier of a card application that is bound when the terminal is logged in to with the account number.

In a sixth implementation form of the first aspect the obtaining the first historical card binding record associated with the account number comprises:
∘ obtaining the first historical card binding record from the digital wallet server.

In a seventh implementation form of the first aspect the obtaining the second historical card binding record associated with the account number comprises:
∘ searching a locally stored list to obtain the second historical card binding record, wherein the list stores the identifier of the card application that is bound when the terminal is logged in to with the account number; or
∘ obtaining the second historical card binding record from the digital wallet server.

In an eighth implemention form of the first aspect the determining the two bank cards associated with the account number with which the digital wallet APP is currently logged in to further comprises:
∘ receiving a third historical card binding record sent by the digtial wallet server, wherein the third historical card binding record comprises an identifier of a card application that is associated with the account number and that is not locally bound to the terminal; and
∘ determining that bank cards corresponding to identifiers of card applications in the third historical card binding record are the two bank cards.

In a ninth implementation form of the first aspect the determining the two bank cards associated with the account number with which the digital wallet APP is currently logged in to further comprises:
∘ determining that all bank cards supported by the digital wallet APP are the two bank cards associated with the account number with which the digital wallet APP is currently logged in to.

In a second aspect the system is provided comprising a terminal, a digital wallet server, a first bank server, and a second bank server, wherein the system is configured to perform any of the above first aspect or its implementation forms.

According to the foregoing method, after determining at least one to-be-bound bank card and the to-be-verified bank card, the user needs to enter only the verification information of the to-be-verified bank card to complete binding of all to-be-bound bank cards, so that all the to-be-bound bank cards (or most of the to-be-bound bank cards) can be bound after verification performed on verification information of one bank card (or few bank cards) succeeds.

In the embodiments of this application, a name of the terminal constitutes no limitation on devices. During actual implementation, these devices may have other names, provided that functions of the devices are similar to those in the embodiments of this application, in other words, fall within the scope of the claims of this application and the equivalent technologies thereof.

### BRIEF DESCRIPTION OF DRAWINGS

FIG. 1 is a schematic structural diagram of a terminal according to an embodiment of this application;
FIG. 2A-1 and FIG. 2A-2 are an example diagram 1 of an application scenario of a card binding method according to an embodiment of this application;
FIG. 2B is an example diagram 2 of an application scenario of a card binding method according to an embodiment of this application;
FIG. 2C is an example diagram 3 of an application scenario of a card binding method according to an embodiment of this application;
FIG. 2D is an example diagram 4 of an application scenario of a card binding method according to an embodiment of this application;
FIG. 2E-1 and FIG. 2E-2 are an example diagram 5 of an application scenario of a card binding method according to an embodiment of this application;
FIG. 2F is an example diagram 6 of an application scenario of a card binding method according to an embodiment of this application;
FIG. 3A and FIG. 3B are a schematic diagram 1 of a specific implementation process of a card binding method according to an embodiment of this application;
FIG. 4A and FIG. 4B are a schematic diagram 2 of an example not forming part of the invention;
FIG. 5A and FIG. 5B are a schematic diagram 3 of an example not forming part of the invention;
FIG. 6 is a schematic structural diagram of a terminal according to an embodiment of this application;
FIG. 7 is a schematic structural diagram of a digital wallet server according to an embodiment of this application; and
FIG. 8 is a schematic structural diagram of another digital wallet server according to an embodiment of this application.

### DESCRIPTION OF EMBODIMENTS

A terminal configured to perform a card binding method provided in the embodiments of this application may be specifically any terminal having an NFC payment function, for example, a mobile phone, a wearable device, an augmented reality (augmented reality, AR) device/a virtual reality (virtual reality, VR) device, a tablet computer, a notebook computer, an ultra-mobile personal computer (ultra-mobile personal computer, UMPC), a netbook, or a personal digital assistant (personal digital assistant, PDA). Certainly, a specific form of the terminal is not limited in the following embodiments.

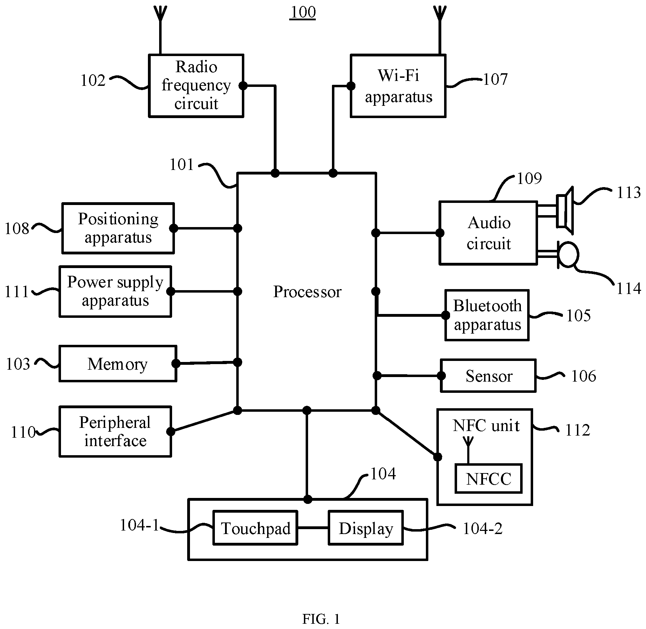

For example, as shown in FIG. 1, a terminal 100 may specifically include components such as a processor 101, a radio frequency (radio frequency, RF) circuit 102, a memory 103, a touchscreen 104, a Bluetooth apparatus 105, one or more sensors 106, a wireless fidelity (Wireless-Fidelity, Wi-Fi) apparatus 107, a positioning apparatus 108, an audio circuit 109, a peripheral interface 110, a power supply system 111, and a near field communication (near field communication, NFC) apparatus 112. These components may communicate with each other by using one or more communications buses or signal lines (not shown in FIG. 1). A person skilled in the art may understand that a hardware structure shown in FIG. 1 does not constitute a limitation on the terminal 100. The terminal 100 may include more or fewer components than those shown in the figure, or combine some components, or have different component arrangements.

The following describes the components of the terminal 100 in detail with reference to FIG. 1.

The processor 101 is a control center of the terminal 100. The processor 101 is connected to parts of the terminal 100 by using various interfaces and lines, runs or executes an application stored in the memory 103, and invokes data stored in the memory 103, to perform various functions of the terminal 100 and data processing. In some embodiments, the processor 101 may include one or more processing units. For example, the processor 101 may be a Kirin 960 chip manufactured by Huawei. In some embodiments of this application, the processor 101 may further include a fingerprint verification chip, configured to verify a collected fingerprint.

The radio frequency circuit 102 may be configured to receive and send a radio signal in an information receiving and sending process or in a call process. Particularly, after receiving downlink data from a base station, the radio frequency circuit 102 may send the downlink data to the processor 101 for processing, and send related uplink data to the base station. Generally, the radio frequency circuit includes but is not limited to an antenna, at least one amplifier, a transceiver, a coupler, a low noise amplifier, a duplexer, and the like. In addition, the radio frequency circuit 102 may further communicate with another device through wireless communication. The wireless communication may use any communications standard or protocol, including but not limited to a global system for mobile communications, a general packet radio service, code division multiple access, wideband code division multiple access, long term evolution, an email, an SMS message service, and the like.

The memory 103 is configured to store the application and the data. The processor 101 runs the application and the data stored in the memory 103, to perform various functions of the terminal 100 and data processing. The memory 103 mainly includes a program storage area and a data storage area. The program storage area may store an operating system, and an application program required by at least one function (for example, a sound playing function or an image playing function). The data storage area may store data (for example, audio data or an address book) created when the terminal 100 is used. In addition, the memory 103 may include a high-speed random access memory (random access memory, RAM), or may include a nonvolatile memory such as a magnetic disk storage device, a flash memory device, or another volatile solid-state storage device. The memory 103 may store various operating systems such as an iOS^{®} operating system developed by Apple and an Android^{®} operating system developed by Google. The memory 103 may be independent, and is connected to the processor 101 by using the communication bus; or the memory 103 may be integrated with the processor 101.

The touchscreen 104 may specifically include a touchpad 104-1 and a display 104-2.

As an input device of the terminal, the touchpad 104-1 may collect a touch event performed by a user on or near the touchpad 104-1 (for example, an operation performed by the user on the touchpad 104-1 or near the touchpad 104-1 by using any proper object such as a finger or a stylus), and send collected touch information to another component (for example, the processor 101). The touch event performed by the user near the touchpad 104-1 may be referred to as a floating touch. The floating touch may mean that the user does not need to directly touch the touchpad for selecting, moving, or dragging an object (for example, an icon), and the user only needs to be near the terminal to execute a desired function. In addition, the touchpad 104-1 may be implemented in a plurality of types such as a resistive type, a capacitive type, an infrared type, and a surface acoustic wave type.

The display (may also be referred to as a display screen) 104-2 may be configured to display information entered by the user or information provided for the user, and various menus of the terminal 100. The display 104-2 may be configured in a form of a liquid crystal display, an organic light emitting diode, or the like. The touchpad 104-1 may cover the display 104-2. After detecting the touch event performed on or near the touchpad 104-1, the touchpad 104-1 transfers the touch event to the processor 101 to determine a type of the touch event. Then, the processor 101 may provide a corresponding visual output on the display 104-2 based on the type of the touch event. Although in FIG. 1, the touchpad 104-1 and the display 104-2 are used as two independent components to implement input and output functions of the terminal 100, in some embodiments, the touchpad 104-1 and the display 104-2 may be integrated to implement the input and output functions of the terminal 100.

It may be understood that the touchscreen 104 is formed by stacking a plurality of layers of materials. In this embodiment of this application, only the touchpad (layer) and the display screen (layer) are displayed, and another layer is not recorded in this embodiment of this application. In addition, the touchpad 104-1 may be disposed on the front of the terminal 100 in a full panel form, and the display 104-2 may also be disposed on the front of the terminal 100 in a full panel form. In this way, a bezel-less structure can be implemented on the front of the mobile phone.

It should be noted that the terminal 100 may further include another input device, for example, may include but is not limited to one or more of a physical keyboard, a function key (such as a volume control key or a power switch key), a trackball, a mouse, a joystick, and the like.

The terminal 100 may further include the Bluetooth apparatus 105, configured to exchange data between the terminal 100 and another terminal (for example, a mobile phone or a smartwatch) at a short distance from the terminal 100. In this embodiment of this application, the Bluetooth apparatus may be an integrated circuit, a Bluetooth chip, or the like.

The terminal 100 may further include the at least one sensor 106, such as a fingerprint collection component, a light sensor, a motion sensor, and another sensor. Specifically, the fingerprint collection component may be disposed on the back of the terminal 100 (for example, at a lower part of a rear-facing camera), or the fingerprint collection component may be disposed on the front of the terminal 100 (for example, at a lower part of the touchscreen 104). For another example, the fingerprint collection component may be disposed on the touchscreen 104 to implement a fingerprint recognition function. In other words, the fingerprint collection component may be integrated with the touchscreen 104 to implement the fingerprint recognition function of the terminal 100. The light sensor may include an ambient light sensor and a proximity sensor. The ambient light sensor may adjust luminance of the display of the touchscreen 104 based on luminance of ambient light. The proximity sensor may power off the display when the terminal 100 is moved to an ear. As one type of the motion sensor, an accelerometer sensor may detect acceleration values in all directions (usually on three axes). The accelerometer sensor may detect a value and a direction of gravity when the accelerometer sensor is stationary, and may be applied to an application for recognizing a mobile phone posture (for example, switching between a landscape screen and a vertical screen, a related game, and magnetometer posture calibration), a function related to vibration recognition (such as a pedometer and a knock), and the like. Other sensors such as a gyroscope, a barometer, a hygrometer, a thermometer, and an infrared sensor may be further configured in the terminal 100, and details are not described herein.

The Wi-Fi apparatus 107 is configured to provide the terminal 100 with network access that complies with a Wi-Fi related standard protocol. The terminal 100 may access a Wi-Fi access point by using the Wi-Fi apparatus 107, to help the user receive and send an email, browse a web page, access streaming media, and the like. The Wi-Fi apparatus 107 provides wireless broadband internet access for the user. In some other embodiments, the Wi-Fi apparatus 107 may be used as a Wi-Fi wireless access point, and may provide Wi-Fi network access for another terminal.

The positioning apparatus 108 is configured to provide a geographical location for the terminal 100. It can be understood that the positioning apparatus 108 may be specifically a receiver of a positioning system such as a global positioning system (global positioning system, GPS), a BeiDou navigation satellite system, or a Russian GLONASS. After receiving the geographical location sent by the positioning system, the positioning apparatus 108 sends the information to the processor 101 for processing, or sends the information to the memory 103 for storage. In some other embodiments, the positioning apparatus 108 may be alternatively a receiver of an assisted global positioning system (assisted global positioning system, AGPS). The AGPS system serves as an assisted server to assist the positioning apparatus 108 in completing ranging and positioning services. In this case, the assisted positioning server communicates with the positioning apparatus 108 (namely, a GPS receiver) of a terminal such as the terminal 100 through a wireless communications network, to provide positioning assistance. In some other embodiments, the positioning apparatus 108 may be alternatively a positioning technology that is based on a Wi-Fi access point. Each Wi-Fi access point has a globally unique media access control (media access control, MAC) address, and the terminal can scan and collect a broadcast signal of a nearby Wi-Fi access point when the terminal enables Wi-Fi. Therefore, a MAC address that is broadcast by the Wi-Fi access point can be obtained. The terminal sends, to a location server through the wireless communications network, data (for example, the MAC address) that can identify the Wi-Fi access point. The location server obtains a geographical location of each Wi-Fi access point through retrieving, calculates a geographical location of the terminal with reference to a strength of a Wi-Fi broadcast signal, and sends the geographical location of the terminal to the positioning apparatus 108 of the terminal.

The NFC apparatus 112 is configured to provide an NFC function for the terminal to support various NFC services. For example, after the terminal is simulated as a card, the terminal is directly close to a point of sale (point of sale, POS) terminal to complete NFC payment through card swiping, or when the terminal is used as a reader/writer, the terminal is directly close to a physical card to complete NFC card reading of data in the card, NFC data transmission, and the like. The NFC apparatus 112 includes an NFC controller (Near Field Communication Controller, NFCC), and a function of the NFC apparatus 112 includes modulation and demodulation of a radio frequency signal and NFC protocol processing. The NFCC is connected to a radio frequency antenna (namely, an NFC antenna) to send and receive an NFC signal.

Optionally, to implement the NFC service, and in particular, NFC payment, the mobile phone may further include a security element (security element, SE). The SE is configured to securely store sensitive information and provide a secure execution environment for a transaction service. The SE may be integrated into the processor 101, or may be located in a subscriber identification module (Subscriber Identification Module, SIM) card of the mobile phone, or may be located in a secure digital memory card (Secure Digital Memory Card, SD) of the mobile phone, or may be an independent chip. The NFCC may be connected to the SE.

The audio circuit 109, a speaker 113, and a microphone 114 may provide an audio interface between the user and the terminal 100. The audio circuit 109 may convert received audio data into an electrical signal and transmit the electrical signal to the speaker 113, and the speaker 113 converts the electrical signal into a sound signal for output. In addition, the microphone 114 converts a collected sound signal into an electrical signal. The audio circuit 109 receives the electrical signal, converts the electrical signal into audio data, and then outputs the audio data to the RF circuit 102 to send the audio data to, for example, another mobile phone, or outputs the audio data to the memory 103 for further processing.

The peripheral interface 110 is configured to provide various interfaces for an external input/output device (for example, a keyboard, a mouse, an external display, an external memory, or a subscriber identification module card). For example, the terminal 100 is connected to the mouse through a universal serial bus (universal serial bus, USB) interface. By using a metal contact on a card slot of a subscriber identification module (subscriber identification module, SIM) card provided by a telecommunications operator, the terminal 100 is connected to the subscriber identification module card. The peripheral interface 110 may be configured to couple the foregoing external input/output peripheral device to the processor 101 and the memory 103.

The terminal 100 may further include the power supply apparatus 111 (for example, a battery or a power management chip) that supplies power to the components. The battery may be logically connected to the processor 101 by using the power management chip, so that functions such as charging, discharging, and power consumption management are implemented by using the power supply apparatus 111.

Although not shown in FIG. 1, the terminal 100 may further include a camera (a front-facing camera and/or a rear-facing camera), a flash, a micro projection apparatus, and the like. Details are not described herein.

It should be noted that the foregoing terminal is merely an example, and the terminal 100 may have more or fewer components than those shown in the figure, or may combine two or more components, or may have different component configurations.

After a digital wallet APP is installed on the terminal and a bank card is bound, the user may complete offline payment by using the digital wallet APP, for example, complete NFC card swiping payment at a brick-and-mortar store or on a physical POS terminal. Currently, when bank cards are to be bound to the digital wallet APP, the user needs to perform processes, for example, enter a card number, a mobile phone number, and a card payment password, and set a wallet payment password and a security question for each to-be-bound bank card, to complete binding. It can be learned that, when a plurality of cards are bound in a current card binding manner, the user performs a relatively cumbersome operation, and consequently card binding efficiency is relatively low.

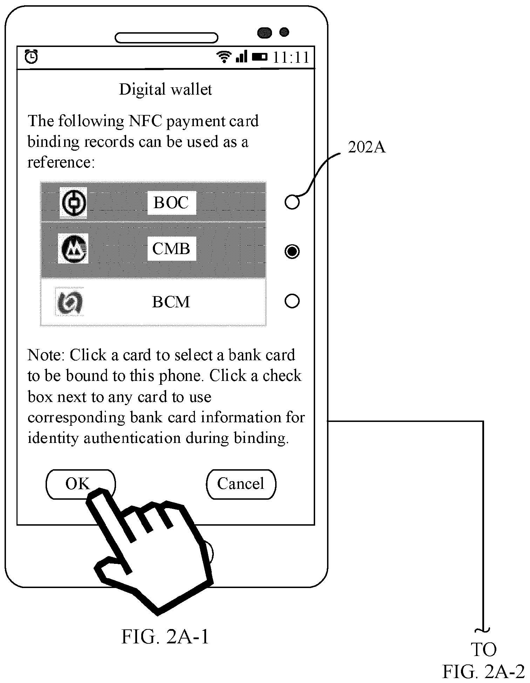

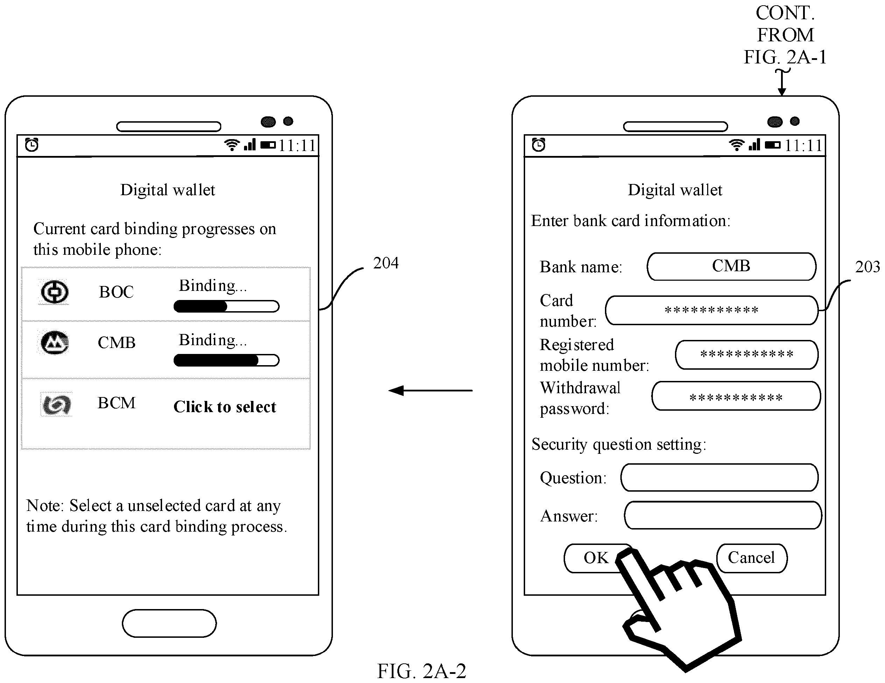

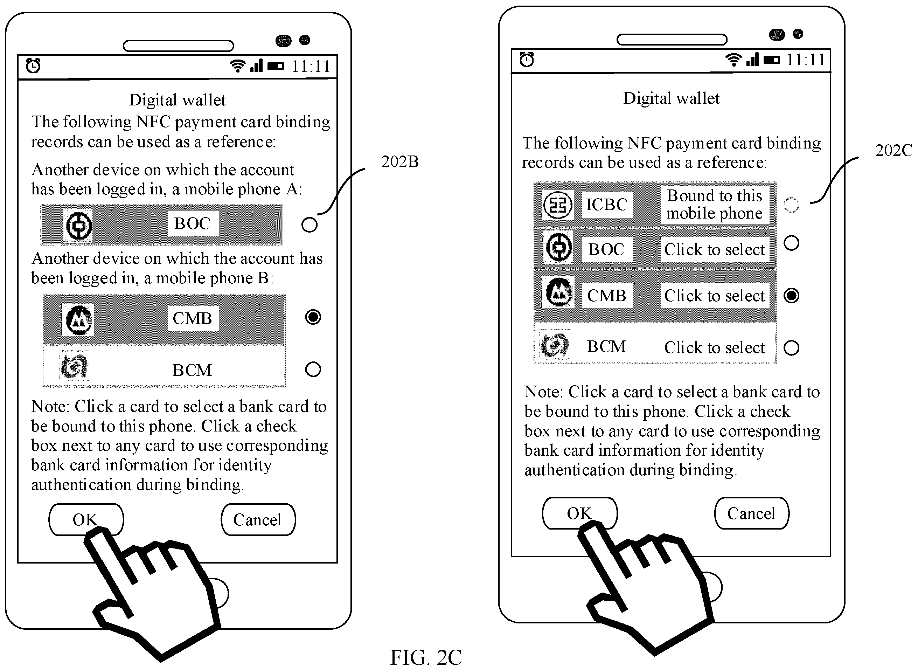

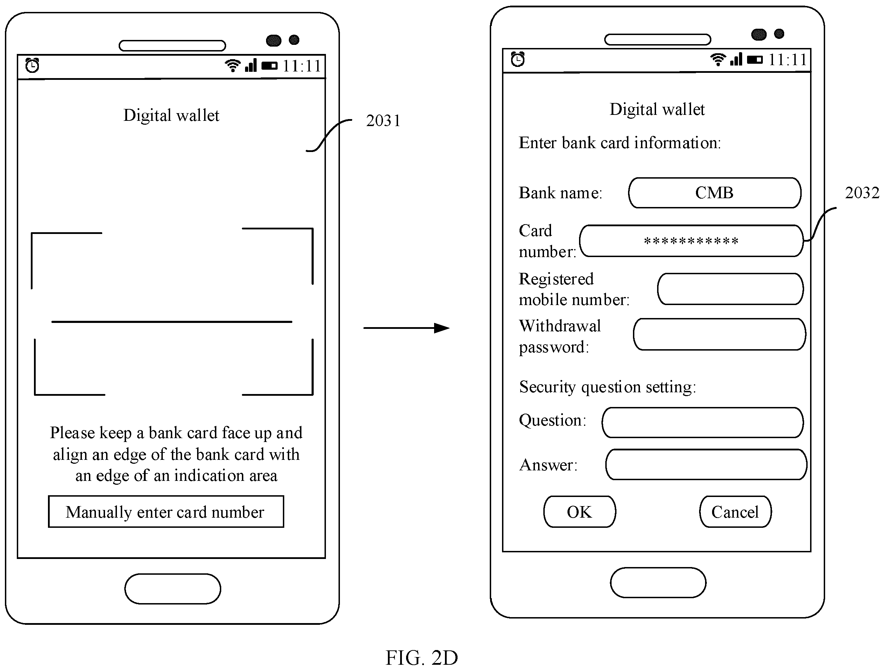

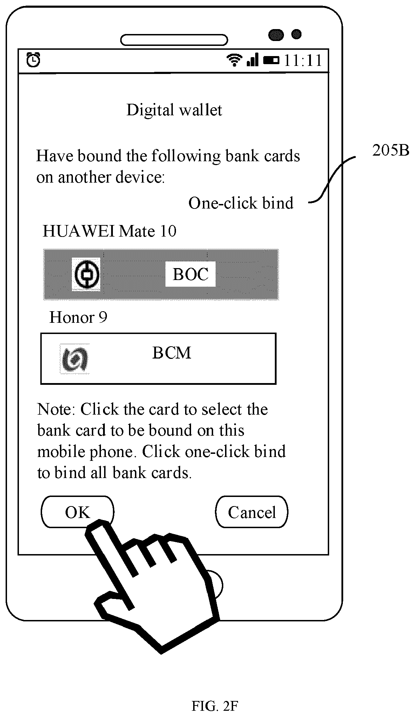

To simplify a user operation to improve card binding efficiency, an embodiment of this application provides a card binding method. According to the method, the user needs to enter only verification information of one bank card or few bank cards, so that all to-be-bound bank cards can be bound at a time. Specifically, referring to FIG. 2A-1 and FIG. 2A-2 and FIG. 2C, the terminal displays a first screen, where the first screen displays at least two bank cards associated with an account number with which the digital wallet APP is currently logged in to. The at least two bank cards may include all bank cards that are associated with the account number but are not bound to the terminal. For a specific implementation of determining the at least two bank cards by the terminal, refer to detailed descriptions below. For example, the terminal displays, on a screen 202A in FIG. 2A-1, at least two bank cards that are associated with a current login account number but are not bound to the terminal, or the terminal displays by group, on a screen 202B in FIG. 2C based on identifiers of terminals, at least two bank cards that are associated with a current login account number but are not bound to the terminal. In other words, the identifiers of the terminals are used to indicate a specific terminal to which each displayed bank card is bound when the account number is used for login. Optionally, the at least two bank cards may include all bank cards associated with the account number. For example, the terminal displays, on a screen 202C in FIG. 2C when the terminal is currently logged in to with a current account number, at least two bank cards that are associated with the account number but are not bound to the terminal, and simultaneously displays a bank card that has been bound to the terminal when the terminal is currently logged in to with the current account number. Then, the terminal determines a to-be-verified bank card and at least one to-be-bound bank card from the at least two bank cards, and obtains verification information of the to-be-verified bank card. For example, the user may select a to-be-verified bank card and a to-be-bound bank card from the at least two bank cards displayed on the screen 202A, 202B, or 202C. After detecting a selection operation of the user, the terminal displays a screen 203 to prompt the user to enter verification information of the to-be-verified bank card. The user may enter related information of the to-be-verified bank card such as a bank name, a card number, a registered mobile phone number, a withdrawal password, and security question setting based on the prompt on the screen 203. Certainly, the user may manually edit and enter the verification information; or may enter the verification information in another manner, for example, by using a voice, or by using a picture such as a picture obtained by photographing a card, or through NFC card reading. This is not limited in this embodiment of this application. As shown in FIG. 2D, after determining the to-be-verified bank card, the terminal displays a screen 2031 to prompt the user to photograph the to-be-verified bank card to read the card number of the to-be-verified bank card. Then, the terminal displays a screen 2032 to prompt the user to continue to enter other verification information of the to-be-verified bank card. Subsequently, the terminal sends the verification information of the to-be-verified bank card to a server to request the server to deliver a card application and personalization data corresponding to each to-be-bound bank card to the terminal after verification performed on the verification information succeeds, to complete binding of the at least one to-be-bound bank card. Optionally, as shown on a screen 204, a binding progress of each to-bebound bank card is displayed in a bank card binding process.

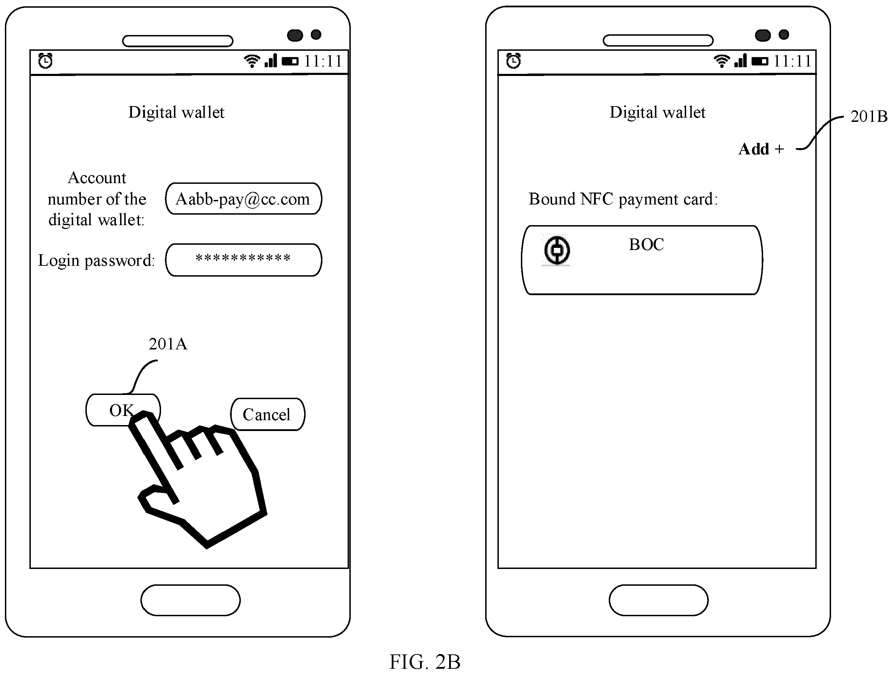

Certainly, referring to FIG. 2B, an operation of triggering the terminal to display the first screen includes a trigger operation entered by the user by using the digital wallet APP. For example, the trigger operation includes a login operation 201A that is entered by the user on a login screen of the digital wallet APP. The trigger operation is mainly applied to a scenario in which a terminal detects that a user logs in to a digital wallet APP on the terminal for the first time by using a specific account number. For example, when the user logs in to the digital wallet APP on a terminal 1 for the first time by using an account number abed, the trigger operation may be the first login operation that is detected by the terminal and that is performed by the user on the terminal 1. For another example, although the user logs in to the digital wallet APP on the terminal 1 by using the account number abcd, when the user logs in to the digital wallet APP on a terminal 2 for the first time by using the account number abcd, the trigger operation may be the first login operation that is detected by the terminal and that is performed by the user on the terminal 2. Still as shown in FIG. 2B, the trigger operation further includes an operation 201B that is of adding a to-be-bound bank card and that is entered through a preset entry such as an add button on a card binding screen after the user successfully logs in to the digital wallet APP. In response to the trigger operation 201A or 201B, the terminal displays the first screen shown on the screen 202A, 202B, or 202C.

It should be noted that bank cards shown in FIG. 2A-1 and FIG. 2A-2 to FIG. 2D may be specifically classified into different types of cards, such as a debit card and a credit card. During specific implementation, a clear prompt may be provided in a form of a text, a picture, or the like. This is not limited in the embodiments of this application.

In another implementation, after the user selects the to-be-bound bank card and the to-be-verified bank card from the shown screen 202A, for example, only one bank card is selected, and the bank card is both the to-be-bound bank card and the to-be-verified bank card. In this case, after the user enters the verification information by using the screen 203, a screen shown as the screen 202A may be displayed again to prompt the user that another to-be-bound bank card may be further selected. Then, a subsequent card binding process is performed, and a screen shown as the screen 204 is displayed.

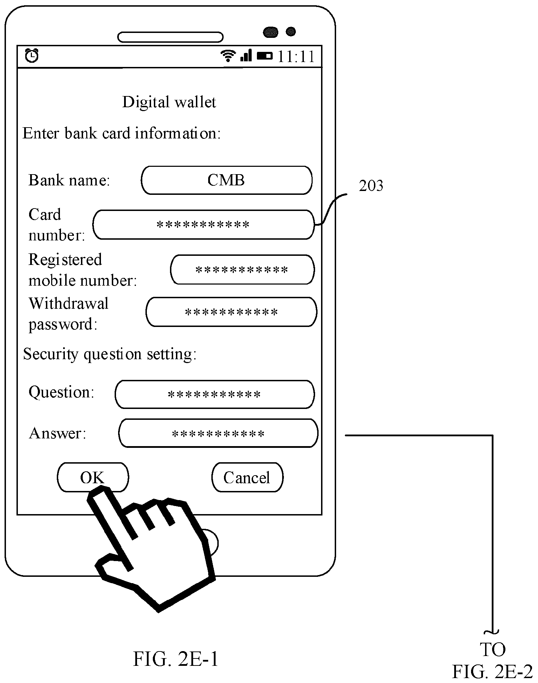

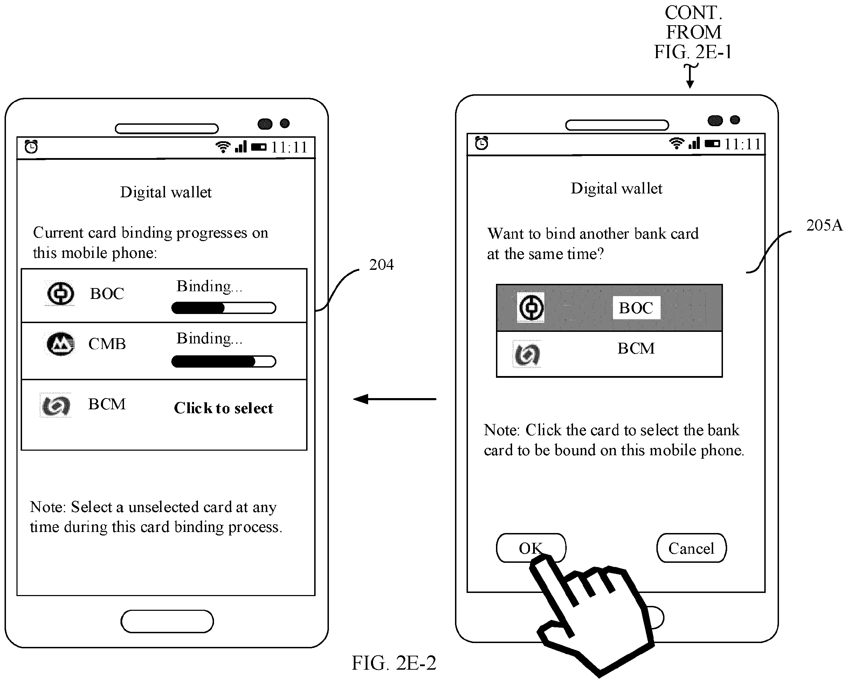

In another implementation, when the user enters verification information of a bank card to the digital wallet APP to bind the bank card, the user is prompted whether to bind all remaining bank cards. In addition, all other bank cards are bound based on the entered verification information of the bank card without a need to enter verification information of the remaining to-be-bound bank cards by the user. Referring to FIG. 2E-1 and FIG. 2E-2, after detecting the trigger operation of the user, the terminal displays the screen 203 to prompt the user to enter verification information of the to-be-bound bank card (China Merchants Bank is used as an example in the figure). Certainly, as described above, the trigger operation may be the login operation 201A of logging in to the digital wallet APP shown in FIG. 2B or the bank card adding operation 201B that is entered after the digital wallet APP has been logged in. After the user enters the verification information, the terminal displays a screen 205A. The screen is used to prompt the user whether to bind another bank card while binding the China Merchants Bank (CMB) card, and provide other bank cards that can be selected by the user, such as a Bank of China (BOC) card and a Bank of Communications (BCM) card. Certainly, for bank cards that are specifically prompted by the screen 205A, refer to detailed descriptions below. For example, the user selects the Bank of China card. The user does not need to enter verification information of the Bank of China card. As shown on the screen 204, the terminal may bind both the Bank of China card and the China Merchants Bank card based on the verification information of the China Merchants Bank card previously entered by the user.

Optionally, the shown prompt screen 205A may be replaced with a shown prompt screen 205B. On the prompt screen 205B, the terminal displays the historical card binding information associated with the current account number. The historical card binding information is specifically bank card information bound when the user logged in to the current account on another device. For example, the screen 205B shows that the user bound a Bank of China card on HUAWEI Mate 10 and bound a Bank of Communications card on Honor 9. In this way, the user may select, based on the prompt information, a to-be-bound bank card.

Optionally, in the foregoing method, before displaying the at least two bank cards associated with the account number with which the digital wallet APP is currently logged in to, the terminal may determine, in the following implementations, the at least two bank cards that are displayed on the screen 202A, 202B, or 202C and that are associated with the account number with which the digital wallet APP is currently logged in to.

Implementation 1: The terminal obtains a first historical card binding record associated with the account number, where the first historical card binding record refers to a list including identifiers of all card applications associated with the account number, or another record form. Further, the terminal attempts to obtain a second historical card binding record associated with the account number, where the second historical card binding record refers to a list including an identifier of a card application that is bound when the current terminal is logged in to with the account number, or another record form. If obtaining the second historical card binding record associated with the account number, the terminal determines that bank cards corresponding to identifiers of card applications that are not included in the second historical card binding record but are included in the first historical card binding record are the at least two bank cards. If not obtaining the second historical card binding record, the terminal determines that bank cards corresponding to identifiers of card applications in the first historical card binding record are the at least two bank cards.

The first historical card binding record is all card binding records associated with the account number. To be specific, the first historical card binding record includes a set of records of all bank cards bound by performing a card binding operation after the user logs in to the current account on each terminal (including the current terminal and another terminal). Optionally, the first historical card binding record not only includes an identifier of a bank card that is currently still bound, but also may include an identifier of a bank card that was bound but is currently unbound. The terminal may obtain the first historical card binding record from a digital wallet server. In this manner, the digital wallet server needs to store a card binding record generated when each terminal is logged in to with the current account number. Specifically, during obtaining, after logging in to the current account number, the terminal may send a request to the digital wallet server to obtain the first historical card binding record. For example, once the terminal detects that the user logs in to the account on a digital wallet APP of a terminal or performs a card adding operation, the digital wallet APP actively requests to obtain the first historical card binding record from the digital wallet server. Alternatively, after detecting that the current account is logged in to by the digital wallet APP on the current terminal, the digital wallet server may actively push the first historical card binding record. For example, once detecting the foregoing login operation or the card adding operation of a terminal, the digital wallet server actively pushes the first historical card binding record to a digital wallet APP of the terminal. For example, the first historical card binding record is shown in Table 1, Table 2, or Table 3.

**Table 7**

| Digital wallet account | | Card application list information | Card application status |
|---|---|---|---|
| Digital wallet account 1 | | Bank of China debit card | Available: bound |
| | Industrial and Commercial Bank of China (ICBC) credit card | | Available: bound |
| | China Construction Bank (CCB) credit card | | Unavailable: unbound/deleted |

**Table 2**

| Digital wallet account | | Card application list information | Card application status |
|---|---|---|---|
| Digital wallet account 1 | | AID 1 | Available: bound |
| | AID 2 | Available: bound | |
| | AID 3 | Unavailable: unbound/deleted | |

**Table 3**

| Digital wallet account | Terminal identity | Card application list information | Card application status |
|---|---|---|---|
| Digital wallet account 1 | Terminal identity 1 | Bank of China debit card | Available: bound |
| Terminal identity 2 | Industrial and Commercial Bank of China credit card | | Available: bound |
| Terminal identity 1 | China Construction Bank credit card | | Unavailable: unbound/deleted |

It should be noted that, in Table 1 and Table 2, the first historical card binding record pushed by the digital wallet server to the terminal includes only the identifiers of the card applications, and a terminal to which each card application belongs is not distinguished. In Table 3, in addition to the identifiers of the card applications, the first historical card binding record pushed by the digital wallet server to the terminal includes an identifier of a terminal to which each card application belongs. In addition, the identifiers of the card applications in Table 1 and Table 3 are represented by using the types of the card applications (in other words, a bank to which a card application belongs and a type of the card application, such as a debit card and a credit card of a bank). In Table 2, the identifiers of the card applications are represented by using the application identifiers (application identifier, AID). Both the two representation manners can indicate bank cards corresponding to the identifiers of the card applications. In another implementation, the identifiers of the card applications may also be represented by information such as names or numbers of the card applications. In addition, the first historical card binding record shown in Table 1, Table 2, or Table 3 further includes statuses of the card applications, and actually, may not include the statuses of the card applications.

The second historical card binding record includes a card application that is currently on the terminal and that is effectively bound to the current account number, and the effectively bound card application mentioned herein is a card application that is still bound to the current account and that is not unbound or deleted. Optionally, the terminal may locally find the second historical card binding record. In this implementation, the digital wallet APP is required to locally maintain a record on the terminal, for example, store the record in a trusted execution environment (Trusted Execution Environment, TEE), or a trusted application (Trusted Application, TA) in the TEE is responsible for maintaining the record. The record may be in a form of a list, and the record is used to associate each account with a card application corresponding to the account number. Therefore, the digital wallet APP may determine, by locally searching the current terminal whether the record exists, whether the foregoing effective card binding record exists, in other words, the second historical card binding record. Alternatively, the terminal may obtain the second historical card binding record from the digital wallet server. For a specific implementation, refer to that the terminal obtains the first historical card binding record from the digital wallet server. Details are not described herein.

For example, as shown in Table 4, the second historical card binding record is a card application that exists on the current terminal and that is effectively bound to a current digital wallet account number.

**Table 4**

| Digital wallet account | Card application list information | Card application status |
|---|---|---|
| Digital wallet account 1 | Bank of China debit card | Available: bound |

After the terminal separately obtains the first historical card binding record and the second historical card binding record, because the second historical card binding record refers to the identifiers of the bound card applications when the current terminal is logged in to with the current account number, it means that the current terminal already stores and binds these card applications and there is no need for further binding. Therefore, only bank cards corresponding to identifiers of card applications that are not included in the second historical card binding record but are included in the first historical card binding record may be determined as the at least two bank cards. For example, referring to the first historical card binding record shown in Table 3 and the second historical card binding record shown in Table 4, the "Industrial and Commercial Bank of China credit card" is a bank card bound by the user on another terminal, and the "China Construction Bank credit card" is a bank card that was bound when the user logged in to the current account on the current terminal but has been unbound. All these bank cards may be bank cards that the user currently wants to bind to the current terminal. Therefore, the "Industrial and Commercial Bank of China credit card" and the "China Construction Bank credit card" may be determined as the at least two bank cards described above and displayed. Certainly, as described above, only these bank cards may be directly displayed by using the screen 202A shown in FIG. 2A-1. Considering that the at least two bank cards may be previously bound by performing a card binding operation when another different terminal is logged in to with the account number, therefore, similar to the screen 202B shown in FIG. 2C, when displaying the at least two bank cards to the user, the terminal further separately displays terminal identifiers corresponding to these bank cards, to be specific, displays these bank cards on a screen based on terminal grouping. Certainly, similar to the screen 202C shown in FIG. 2D, in addition to displaying the at least two bank cards that have not been bound to the terminal, the terminal may further display a currently bound bank card.

Implementation 2: The terminal receives a third historical card binding record sent by the server, where the third historical card binding record includes an identifier of a card application that is associated with the account number and that is not locally bound to the terminal, in other words, when the current terminal is logged in to with the current account number, an identifier of a card application that is not bound to the current terminal. Then, the terminal determines that bank cards corresponding to identifiers of card applications in the third historical card binding record are the at least two bank cards. In this implementation, the digital wallet server is required to store a card binding record generated when each terminal is logged in to with the current account number, and optionally, may further include a record indicating an unbound bank card after being bound, or the like. For example, when the digital wallet server stores both the first historical card binding record and the second historical card binding record, the digital wallet server may directly obtain, based on the first historical card binding record and the second historical card binding record that are stored by the digital wallet server, identifiers of unbound card applications when the current terminal is logged in to with the current account number, and send these identifiers to the terminal by using a list or another record form as the third historical card binding record. Alternatively, the digital wallet server may store only the first historical card binding record, and then directly send, to the current terminal as the third historical card binding record, a card binding record that is in the first historical card binding record and that corresponds to another terminal except the current terminal and a card binding record that corresponds to the current terminal and that is of a bank card that was bound but has been unbound. Likewise, when pushing the third historical card binding record, the server may push the third historical card binding record after receiving a request of the terminal, or may actively push the third historical card binding record.

Optionally, in another implementation, the terminal may further directly determine that all bank cards supported by the digital wallet APP are the at least two bank cards associated with the account number with which the digital wallet APP is currently logged in to. This implementation is mainly applicable to a scenario in which the user logs in to the current account for first-time card binding, for example, a scenario in which a newly registered account is used for first-time card binding on a terminal.

Optionally, when the to-be-verified bank card and the at least one to-be-bound bank card are determined from the at least two bank cards, in addition to, shown in FIG. 2A-1 and FIG. 2A-2 to FIG. 2D, the to-be-verified bank card and the at least one to-be-bound bank card are determined from the at least two bank cards based on the selection operation of the user, when the user is not prompted to perform selection, or even if the user is prompted to perform selection but the user does not perform selection for a long time, the terminal may further automatically determine, according to a preset rule, the to-be-verified bank card and the to-be-bound bank card. For example, the preset rule may be: determining the to-be-bound bank card or the to-be-verified bank card based on a historical usage status of the user, for example, a bank card whose historical usage times exceed a preset quantity of times, or a bank card that is relatively frequently used within a preset time or a preset location range. Alternatively, bank cards in the determined at least two bank cards are all directly determined, by default, as to-be-bound bank cards, and any bank card is selected from the to-be-bound bank cards as the to-be-verified bank card.

In addition, it should be noted that, in FIG. 2A-1 and FIG. 2A-2 to FIG. 2D, an example in which the user selects one of the at least one to-be-bound bank card as the to-be-verified bank card is used for description. In actual application, a quantity of to-be-verified bank cards is not limited. In other words, there may be a plurality of to-be-verified bank cards selected by the user. For example, for banks corresponding to all the to-be-bound bank cards, if there is cooperation between one type of specific banks, mutual trust identity verification may be performed on the user, and if there is cooperation between another type of bank cards, mutual trust identity verification may be performed on the user. Therefore, a to-be-verified card needs to be separately selected for each type of bank that has mutual trust cooperation, in other words, a to-be-verified bank card is separately selected for each of two groups of to-be-bound bank cards in all the to-be-bound bank cards. In addition, that mutual trust identity verification exists between a bank A and a bank B may be understood as that information about a bank card issued by the bank A, such as a card number, a password, or identity information of a primary subscriber, is sent to the bank B to perform user identity verification, or a result of verification performed by the bank A on the information about the bank card issued by the bank A may be used as a verification credential to send to the bank B, so that the verification credential is used by bank B for identity verification. In addition, in actual application, whether the to-be-verified bank card belongs to the to-be-bound bank card is not limited. In other words, the to-be-verified bank card may be another bank card other than the to-be-bound bank card. In this case, the to-be-verified bank card is used only for verification, and there is no need to deliver a card application and task data of the to-be-verified bank card, in other words, the to-be-verified bank card does not need to be bound.

It should be noted that, when the foregoing method is performed by the terminal 100 shown in FIG. 1, the terminal 100 may receive, by using the RF circuit 102, the trigger operation that is entered by the user by using the digital wallet APP. In response to the trigger operation, the terminal displays, by using the display 104-2, the at least two bank cards associated with the account number with which the digital wallet APP is currently logged in to. Then, the terminal determines the to-be-verified bank card and the at least one to-be-bound bank card from the at least two bank cards by using the processor 101, and obtains the verification information of the to-be-verified bank card. Alternatively, the terminal controls, by using the processor 101, the touchpad 104 to obtain the to-be-verified bank card and the at least one to-be-bound bank card that are determined by the user from the at least two bank cards, and the verification information that is of the to-be-verified bank card and that is entered by the user. Then, the terminal 100 sends, by using the RF circuit 102, the verification information to the server to request the server to deliver a card application and personalization data corresponding to each to-be-bound bank card to the terminal after verification performed on the verification information succeeds, to complete binding of the at least one to-be-bound bank card.

The following describes in detail, by using internal interaction between the terminal, the digital wallet server, and a bank server, a specific implementation process of binding all to-be-bound bank cards based on the verification information of the to-be-verified bank card after the to-be-bound bank card and the to-be-verified bank card are determined in this embodiment of this application. In addition, the following uses an example in which one to-be-verified card is determined and the to-be-verified bank card belongs to one of to-be-bound bank cards for description.

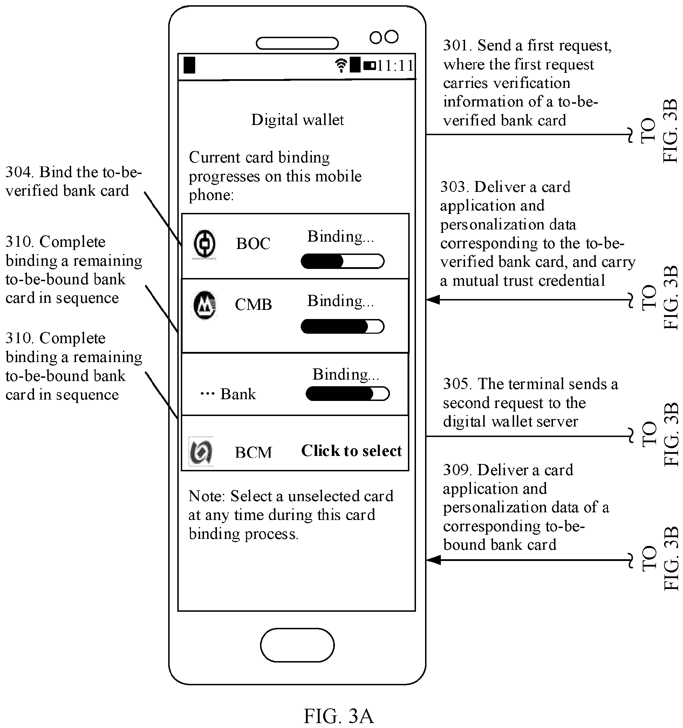

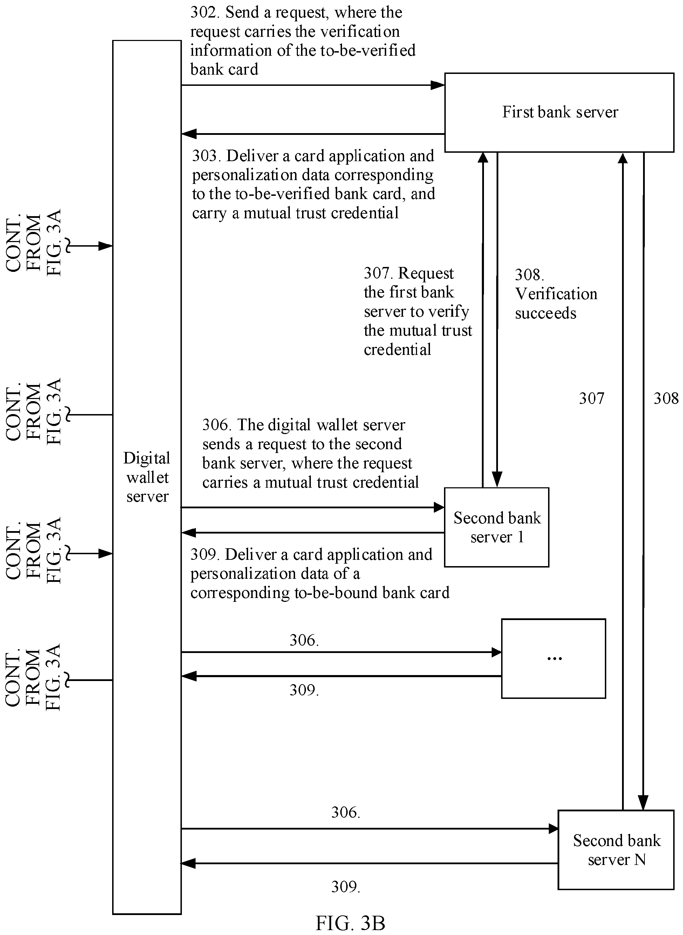

In an implementation, in response to the request of the terminal, the digital wallet server first requests a bank server corresponding to the to-be-verified bank card to perform verification on the to-be-verified bank card based on the verification information of the to-be-verified bank card; generates a mutual trust credential and automatically binds the to-be-verified bank card after verification succeeds; and then, separately requests a bank server corresponding to another to-be-bound bank card to automatically bind the remaining to-be-bound bank card based on the mutual trust credential. Referring to FIG. 3A and FIG. 3B, this implementation specifically includes the following step 301 to step 310.

301. The terminal sends a first request to the digital wallet server.

Optionally, the first request carries the verification information of the to-be-verified bank card. The verification information includes a bank name, a card number, a registered mobile number, a withdrawal password, security question setting, and the like. The information is used to determine whether the to-be-verified bank card is a valid card, further, it may be understood as determining whether a holder of the bank card, in other words, whether a user of the terminal is valid. The first request is used to request to perform verification on the verification information of the to-be-verified bank card, and deliver the card application and the personalization data of the to-be-verified bank card to complete binding of the to-be-verified bank card.

302. The digital wallet server sends a request to a first bank server.

In the embodiments of this application, the bank server corresponding to the to-be-verified bank card is described as the first bank server, and a bank server corresponding to a remaining to-be-bound bank card is described as a second bank server.

In this step, after receiving the first request of the terminal, the digital wallet server sends the request to the first bank server based on the verification information of the to-be-verified bank card. The request includes the verification information and is used to request the first bank server to perform verification based on the verification information.

An identifier of the to-be-verified bank card is used to identify a bank to which the to-be-verified bank card belongs, namely, the first bank server. Each of the identifier of the to-be-verified bank card and an identifier of the to-be-bound bank card may be a name of a bank to which the bank card belongs, a bank organization code, a bank service address, or the like, or may be another identifier that can represent the card application or a bank corresponding to the card application, for example, an AID defined in ISO 7816, where the AID includes a registered application provider identifier RID (Registered Application Provider Identifier, which may represent a card application provider, for example, a bank institution to which the card application belongs), for another example, product identifier information defined in a China financial IC card specification PBOC, where the product identifier information includes a bank identifier code.

In an implementation, before step 301, after determining the to-be-verified bank card and the to-be-bound bank card, the terminal directly sends the identifiers of the to-be-verified bank card and the to-be-bound bank card to the digital wallet server, and the digital wallet server locally stores the identifiers. In this way, the digital wallet server may request, based on these identification requests, a corresponding bank server to deliver the card application and the personalization data corresponding to the to-be-bound bank card to the terminal. For example, in step 302, the digital wallet server determines the first bank server based on the locally stored identifier of the to-be-verified bank card, and sends the request to the first bank server.

Optionally, in another implementation, in step 301, the first request carries the identifier of the to-be-verified bank card. In this case, in step 302, the digital wallet server may request, based on the identifier in the first request of the to-be-verified bank card, the bank server corresponding to the to-be-verified bank card.

In addition, in addition to the verification information of the to-be-verified bank card, the first request may further carry a terminal identifier, an identifier of each to-be-bound bank card, and an account used for currently logging in to the digital wallet APP.

303. The first bank server delivers a card application and personalization data corresponding to the to-be-verified bank card to the terminal after verification performed on the verification information succeeds, where the personalization data carries the mutual trust credential.

Optionally, the card application may be downloaded and installed in a secure area (for example, an SE or a TEE) of the terminal, and the personalization data includes privacy data related to the card application, such as a token (token) and a key of the card. The token may be understood as data that replaces a card number of a physical card, and a function of the token is similar to that of a real card number.

Optionally, the first bank server first sends the card application and the personalization data of the to-be-verified bank card to the digital wallet server, and further, the digital wallet server delivers the card application and the personalization data of the to-be-verified bank card to the terminal. The terminal may bind the to-be-verified bank card based on the card application and the personalization data of the to-be-verified bank card.

Optionally, the first bank server directly delivers the card application and the personalization data of the to-be-verified bank card to the terminal, so that the terminal completes binding the to-be-verified bank card. For example, addressing is performed on the terminal based on the terminal identifier forwarded by the digital wallet server, so as to directly deliver the card application and the personalization data of the card application to the terminal.

The mutual trust credential may be partial information in the personalization data, for example, the foregoing token, or credential information that is specially generated by the first bank server based on the request sent by the digital wallet server or a mutual trust requirement flag carried in the request. The mutual trust requirement flag may be understood as being used to indicate that, during current card binding, the verification information of the to-be-verified card needs to be simultaneously used to complete binding of another bank card.

The mutual trust credential is used to perform, in a process of binding the remaining to-be-bound bank card, cross-bank verification between another second bank server and the first bank server by using the mutual trust credential, so that after cross-bank verification succeeds, the second bank server delivers a card application and personalization data of the another to-be-bound bank card to the terminal. For details, refer to the following detailed description.

304. The terminal binds the to-be-verified bank card based on the card application and the personalization data corresponding to the to-be-verified bank card.

In this step, after the card application of the to-be-verified bank card is downloaded and installed locally on the terminal, the terminal may register an NFC service with a system, and the NFC service may be an HCE service or a non-HCE service, so that the card application changes to an available state, or a state that can be selected and activated by the user and can be used after the user chooses to activate. For the specific implementation, refer to the prior art. Details are not described herein again.

Correspondingly, the digital wallet server may locally store a binding relationship between the account logged in to by the digital wallet and the to-be-verified bank card, or store a binding relationship between the terminal, the account logged in to by the digital wallet, and the to-be-verified bank card.

After binding the to-be-verified bank card is complete, the terminal performs the following steps to further bind the remaining to-be-bound bank card.

305. The terminal sends a second request to the digital wallet server.

The second request is used to request the digital wallet server to send a card application and personalization data of the remaining to-be-bound bank card.

306. The digital wallet server sends a request to a second bank server.

In this step, after receiving the second request sent by the terminal, the digital wallet server sends the request to the corresponding second bank server based on an identifier of the remaining to-be-bound bank card. The request is used to request the second bank server to deliver the card application and the personalization data of the remaining to-be-bound bank card after verification performed on a mutual trust credential succeeds.

The identifier of the remaining to-be-bound bank card is used to identify a bank to which another to-be-bound bank card other than the to-be-verified bank card belongs, namely, the second bank server. Referring to step 302, the identifier of the remaining to-be-bound bank card may be sent by the terminal before step 301. Optionally, the identifier of the remaining to-be-bound bank card may be further carried in the second request in step 305. Optionally, in another implementation, the identifier of the to-be-bound bank card and the identifier of the to-be-verified bank card may be further carried in the first request in step 301.

In this step, the request that is sent by the digital wallet server to the second bank server carries the mutual trust credential. Optionally, the mutual trust credential may be carried in the second request in step 305, and is sent by the terminal to the digital wallet server, and further, is sent by the digital wallet server to the second bank server. Optionally, in step 303, if the first bank server delivers the mutual trust credential to the terminal by using the digital wallet server, the digital wallet server locally stores the mutual trust credential, and the digital wallet server may directly send the locally stored mutual trust credential to the second bank server.

In addition, in addition to the mutual trust credential, the request further carries the terminal identifier, the account used for currently logging in to the digital wallet APP, and the identifier of the to-be-verified bank card (namely, an identifier of the first bank server).

307. The second bank server requests, based on the mutual trust credential, the first bank server to verify the mutual trust credential.

In this step, the second bank server determines the first bank server based on the identifier of the to-be-verified bank card. Certainly, the identifier of the to-be-verified bank card is carried in the request described in step 306.

308. The first bank server sends a verification success message to the second bank server.

In this step, the first bank server verifies the mutual trust credential, and determines whether the mutual trust credential is valid. For example, the first bank server determines whether the mutual trust credential is totally the same as the mutual trust credential previously generated by the first bank server.

Further, the first bank server may further determine whether an identifier of the second bank server is the same as the identifier of the second bank server (in other words, the identifier of the remaining to-be-bound bank card) that is sent by the digital wallet server in step 302.

In addition, if the mutual trust credential is encrypted, the mutual trust credential is further decrypted.

309. The second bank server delivers, to the terminal, the card application and the personalization data of the corresponding to-be-bound bank card.

310. The terminal completes binding the remaining to-be-bound bank card based on the card application and the personalization data that are delivered by the second bank server.

Principles of step 309 and step 310 are similar to that of step 303 and step 304. Details are not described herein again.

It should be noted that in a process of performing step 301 to step 310, the transmitted data may be encrypted. For example, when step 301 is performed, a key of the bank to which the to-be-verified bank card belongs, namely, a key of the first bank server may be used to perform encryption processing on the verification information of the to-be-verified bank card. Correspondingly, the first bank server decrypts encrypted verification information and then performs verification.

In addition, according to an example not falling within the scope of the present invention as claimed, step 301 and step 305 may be combined. To be specific, the terminal sends only one request to the digital wallet server, where the request carries at least the verification information of the to-be-verified bank card. Optionally, the request may further carry identifiers of all to-be-bound bank cards. Then, after the digital wallet server receives the request, steps 302, 303, 304, 306, 307, 308, 309, and 310 are performed between the digital wallet server, the first bank server, and the second bank server. For a specific process, refer to the foregoing description. In this implementation, after receiving the request of the terminal, the digital wallet server first requests the first bank server to verify the to-be-verified bank card, and delivers the card application and the personalization data of the to-be-verified bank card. Then, after determining that personalization of the first card application is complete, the digital wallet server directly parses the mutual trust credential in the personalization data, and separately requests, by using the mutual trust credential, another second bank server to perform cross-bank verification and deliver the card application and the personalization data, to further complete binding.

It can be learned that, based on the process described in step 301 to step 310, the terminal first requests, by using the digital wallet server, the first bank server to verify the to-be-verified bank card, and after verification succeeds, the first bank server delivers the corresponding card application and the personalization data, where the personalization data carries the mutual trust credential. Further, the second bank server is further separately requested, based on the mutual trust credential, to perform cross-bank verification on the mutual trust credential, and after verification succeeds, the second bank server delivers the card application and personalization data of the remaining to-be-bound bank card. In this way, the user can enter only the verification information of the to-be-verified bank card, to bind all the to-be-bound bank cards based on the verification information.

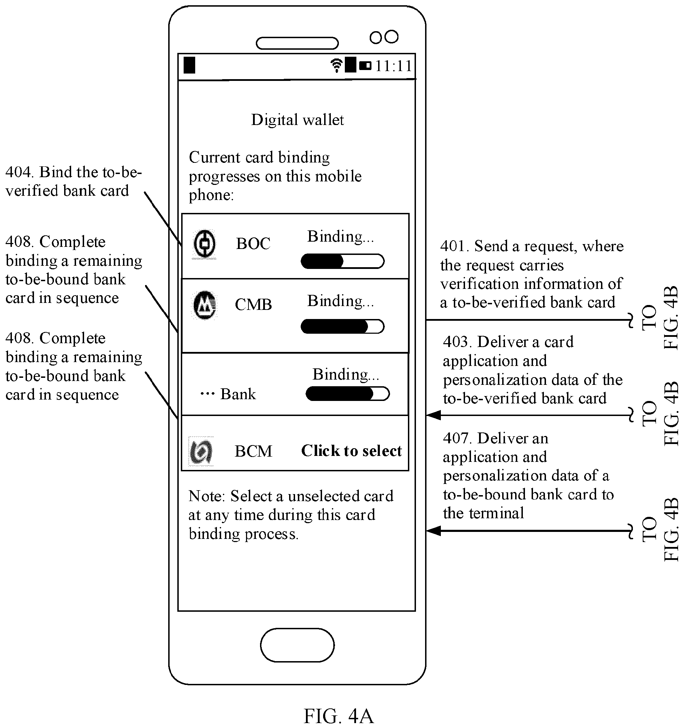

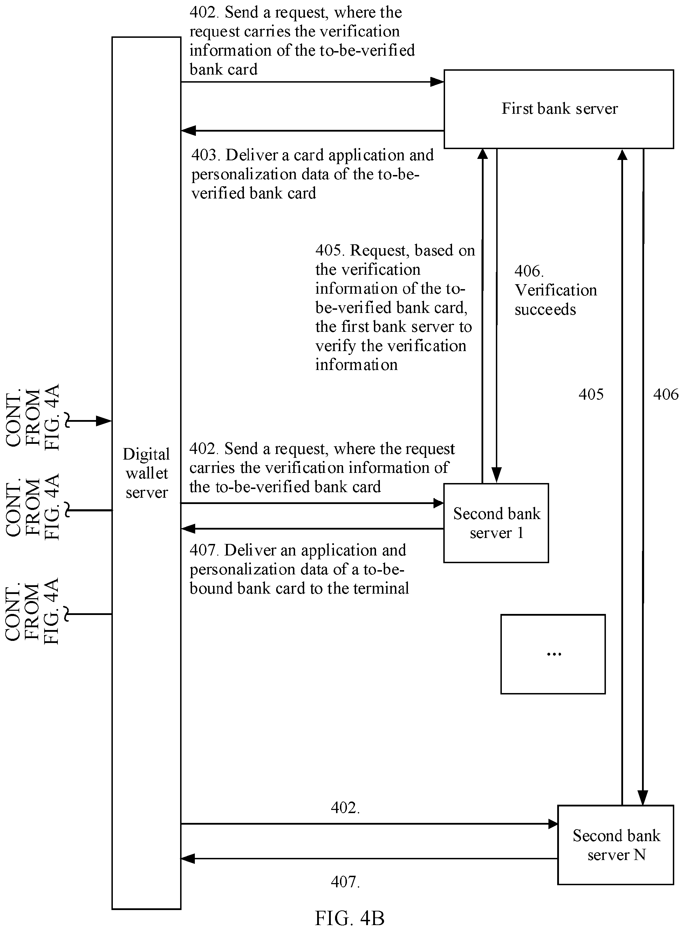

In another implementation, the verification information of the to-be-verified bank card is separately sent to bank servers (including both the first bank server and the second bank server) corresponding to all the to-be-bound bank cards. The bank server corresponding to the to-be-verified bank card, namely, the first bank server, verifies the verification information. A bank server corresponding to another to-be-bound bank card other than the to-be-verified bank, namely, each second bank server, requests, based on the verification information, the first bank server to perform cross-bank verification. After verification succeeds, a card application and personalization data of each to-be-bound bank card are delivered. Referring to FIG. 4A and FIG. 4B, this implementation of an example not forming part of the invention includes the following step 401 to step 407.

401. The terminal sends a request to the digital wallet server.

The request carries the verification information of the to-be-verified bank card. Optionally, the terminal encrypts the verification information of the to-be-verified bank card. The encryption operation may be that the terminal performs one-encryption on the verification information by using the bank server corresponding to the to-be-verified bank card, in other words, a key (for example, a public key or a symmetric key) of the first bank server.

Optionally, the request further carries the identifier of the terminal and the account used for currently logging in to the digital wallet APP.

402. The digital wallet server separately sends a request to the first bank server and the second bank server.

The request carries the verification information of the to-be-verified bank card.

In an implementation, the digital wallet server separately sends the verification information of the to-be-verified bank card to the first bank server and the second bank server based on the identifier of the to-be-verified bank card and an identifier of the remaining to-be-bound bank card.

Certainly, before step 401, after determining the to-be-verified bank card and the to-be-bound bank card, the terminal directly sends the identifiers of the to-be-verified bank card and the remaining to-be-bound bank card to the digital wallet server, and the digital wallet server locally stores the identifiers. Alternatively, the identifiers may be carried in the request described in step 401. It should be noted that, when the digital wallet server sends the request to the second bank server, in addition to carrying the verification information of the to-be-verified bank card, the digital wallet server further carries the identifier of the to-be-verified bank card or the identifier of the first bank server, so that the second bank server finds the first bank server to perform a cross-bank verification operation.

Optionally, before sending the request to the second bank server, the digital wallet server may further perform one-encryption on the verification information in the request (if one-encryption has been performed in step 401, the digital wallet server may perform secondary encryption), in other words, use a key of the second bank server to encrypt the verification information, to ensure data transmission security.

Optionally, the request may further carry the identifier of the terminal and the account used for currently logging in to the digital wallet APP.

403. The first bank server performs verification on the to-be-verified bank card based on the verification information of the to-be-verified bank card, and delivers a card application and personalization data of the to-be-verified bank card to the terminal after verification succeeds.

For a specific implementation of the step, refer to step 303, and details are not described herein again.

404. The terminal binds the to-be-verified bank card based on the card application and the personalization data corresponding to the to-be-verified bank card.

For a specific implementation of the step, refer to step 304, and details are not described herein again.

405. The second bank server requests, based on the verification information of the to-be-verified bank card, the first bank server to verify the verification information.

Optionally, the second bank server may directly send, to the first bank server, the verification information that is of the to-be-verified bank card and that is sent by the digital wallet server. Certainly, after secondary encryption is performed on the verification information of the to-be-verified bank card, encrypted verification information may be sent to the first bank server. For example, encryption is performed by using a private key or a symmetric key of the second bank server. In this case, the public key or the symmetric key of the second bank server may need to be stored on the first bank server. These keys may be keys preset by banks participating in cooperation (which may be understood as both parties agree to cooperate to support cross-bank verification in the embodiments/examples of this application, in other words, a verification result of a bank may be trusted by another bank), or the like.

Optionally, in step 402, the request sent by the digital wallet server to the first bank server may further carry an identifier of another to-be-bound bank card or an identifier of the second bank server. In this way, in this step, the first bank server may further perform verification on the second bank server while verifying the verification information. For example, when receiving a request of a second bank server, the first bank server verifies, based on the received identifier of the to-be-bound bank card or the received identifier of the second bank server, whether the second bank server is valid. If the identifier of the second bank server belongs to the second bank server indicated by the identifier received in step 402 of the to-be-bound bank card or is the identifier received in step 402 of the second bank server, the second bank server is valid; otherwise, the second bank server is invalid.

406. The first bank server sends a verification success message to the second bank server.

407. After receiving the verification success message returned by the first bank server, the second bank server delivers the application and the personalization data of the to-be-bound bank card to the terminal.

408. The terminal completes binding the remaining to-be-bound bank card based on the card application and the personalization data that are delivered by the second bank server.

For a specific implementation of the step, refer to step 310, and details are not described herein again.

It should be noted that a sequence between the implementation process of binding the to-be-verified bank card described in step 403 and step 404 and the implementation process of binding the remaining to-be-bound bank card described in steps 405, 406, 407, and 408 is not limited in the embodiments/examples of this application. The two implementation processes may be simultaneously performed, or may be successively performed.

It can be learned that in the implementation shown in FIG. 4A and FIG. 4B, in addition to sending the verification information of the to-be-verified bank card to the first bank server, the digital wallet server further sends the verification information of the to-be-verified bank card to each second bank server. In this way, the first bank server may directly deliver the card application and the personalization data after verification performed on the verification information succeeds. The second bank server may deliver the corresponding card application and the corresponding personalization data after verification performed on the verification information by using the first bank server succeeds.

It should be noted that in the embodiment shown in FIG. 3A and FIG. 3B, the second bank server requests the first bank server to verify the mutual trust credential shown in step 307 and step 308, and that in the example shown in FIG. 4A and FIG. 4B, the second bank server requests the first bank server to verify the verification information shown in step 405 and step 406 may be alternatively implemented in another manner. For example, these second bank servers separately request, by using an intermediate third-party trusted server, the first bank server to perform cross-bank verification on the information. These intermediate third-party trusted servers may be a party cooperating with all these banks, for example, China UnionPay or another service provider.

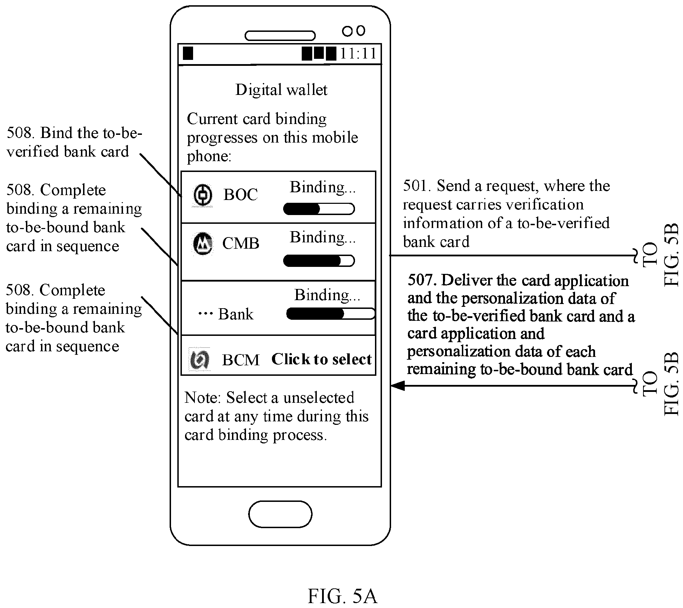

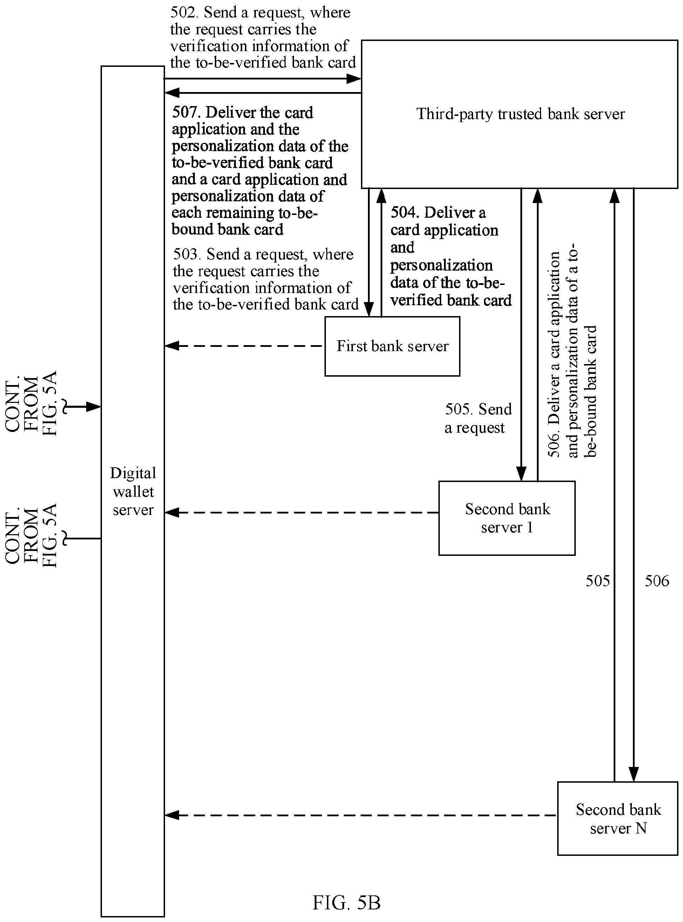

In still another implementation, the digital wallet server sends the verification information of the to-be-verified bank card to a third-party trusted server, the third-party trusted server requests, after verification performed on the verification information succeeds, a first bank server corresponding to the to-be-verified bank card to deliver card application and personalization data of the to-be-verified bank card to perform a card binding operation, and then separately requests a second bank server corresponding to another to-be-bound bank card to perform a card binding operation. It should be noted that the third-party trusted server described in the embodiments/examples of this application may be operated and managed by a digital wallet service provider. In this case, it may be understood that division of the third-party trusted server and the digital wallet server is merely distinguished from logical functions. Certainly, the third-party trusted server may alternatively be run and managed by an independent third-party, for example, a financial institution such as a bank or China UnionPay, or a third-party payment service providing institution such as Alipay. Referring to FIG. 5A and FIG. 5B, this implementation of an example, not forming part of the present invention as claimed, includes the following step 501 to step 508.

501. The terminal sends a request to the digital wallet server.

For the step, refer to step 401, and details are not described herein again.

502. The digital wallet server sends a request to the third-party trusted server.

The request includes the verification information of the to-be-verified bank card and an identifier of each to-be-bound bank card, an identifier of a bank to which each to-be-bound bank card belongs, or an identifier of a bank server to which each to-be-bound bank card belongs. Optionally, the request may further include the identifier of the terminal and the account used for currently logging in to the digital wallet APP.

503. The third-party trusted server sends a request to the first bank server.

The request carries the verification information of the to-be-verified bank card, and is used to request the first bank server to perform verification on the verification information and deliver the card application and the personalization data of the to-be-verified bank card after the verification succeeds.

504. After verification performed on the verification information of the to-be-verified bank card succeeds, the first bank server delivers the card application and the personalization data of the to-be-verified bank card to the third-party trusted server.

For a specific implementation of the step, refer to step 303, and details are not described herein again.

505. The third-party trusted server sends a request to the second bank server.

After the third-party trusted server receives the card application and the personalization data of the to-be-verified bank card that are sent by the first bank server, it indicates that the first bank server has successfully verified the verification information of the to-be-verified bank card. Alternatively, after receiving a verification success result sent by the first bank server, the third-party trusted server determines that the first bank server has successfully verified the verification information of the to-be-verified bank card. In this case, the third-party trusted server may further request each second bank server to deliver a card application and personalization data of a remaining to-be-bound bank card. In other words, step 506 is performed.

Optionally, the request may carry the terminal identifier and the account used for currently logging in to the digital wallet APP, the request may further carry the verification success result, and the request is used to request the second bank server to deliver the corresponding card application and the corresponding personalization data of the to-be-bound bank card. Optionally, if a mutual trust credential is further added in the personalization data delivered by the first bank server to the third-party trusted server in step 504, or a mutual trust credential is further added when the first bank server sends the verification success result to the third-party trusted server, the request sent in step 505 also carries the mutual trust credential. In this way, after receiving the mutual trust credential, the second bank server may send the mutual trust credential to the first bank server, and after the first bank server passes the mutual trust credential, step 506 is performed.

506. The second bank server sends the card application and the personalization data of the to-be-bound bank card to the third-party trusted server.

507. The third-party trusted server delivers, to the terminal, the card application and the personalization data of the to-be-verified bank card and the card application and the personalization data of each remaining to-be-bound bank card.

508. The terminal completes binding each to-be-bound bank card based on the card application and the personalization data of each to-be-bound bank card.

It should be noted that in step 504 and step 506, the first bank server or the second bank server may also directly deliver the card application and the personalization data to the digital wallet server, and the digital wallet server further sends the card application and the personalization data to the terminal. Alternatively, the first bank server or the second bank server directly delivers the card application and the personalization data to the terminal. In addition, in step 507, the third-party trusted server simultaneously delivers or uses the digital wallet server to deliver the card application and the personalization data to the terminal. In another implementation, the third-party trusted server may first deliver the card application and the personalization data of the to-be-verified bank card after step 504, and then deliver the card application and the personalization data of the to-be-bound bank card after step 506.

It can be learned that in this implementation, according to step 501 to step 508, the third-party trusted server separately interacts with the first bank server and the second bank server to complete binding of each to-be-bound bank card in sequence.

In this way, that all the to-be-bound bank cards are bound only based on the verification information of the to-be-verified bank card can be complete in the implementation shown in FIG. 3A and FIG. 3B, FIG. 4A and FIG. 4B, or FIG. 5A and FIG. 5B.

It should be noted that in the implementation shown in FIG. 3A and FIG. 3B, FIG. 4A and FIG. 4B, or FIG. 5A and FIG. 5B, the card application is delivered to the terminal by a corresponding bank server after user identity verification succeeds. Optionally, the card application may be downloaded in another manner. For example, after the digital wallet APP determines the at least two bank cards, but before determines the to-be-verified bank card and the remaining to-be-bound bank card, the digital wallet server may also directly download card applications from bank servers separately corresponding to the determined bank cards, and register the card applications to the system one by one. Then, after the to-be-verified bank card and the to-be-bound bank card are determined, when personalization is performed on the downloaded card applications, personalization is only performed on the card applications of the to-be-verified bank card and the to-be-bound bank card. Certainly, when the personalization operation is complete, similar to the manner described in the foregoing example, the digital wallet server may be used to request each bank server to verify the verification information of the to-be-verified bank card, and then delivers corresponding personalization data after verification succeeds.

In addition, after card applications of all the to-be-bound bank cards are bound, in actual application, an association between the card application and a corresponding account further needs to be established, so that when the user uses the bound card application to perform NFC payment, fee deduction from the corresponding account may be implemented in any one of the following manners. (1) All the bound card applications are associated with an account of the to-be-verified bank card, in other words, fee deduction is performed from the account of the to-be-verified bank card during subsequent card-swiping consumption of the user. (2) Each bound card application is associated with a bank card account that is previously opened by the user in a bank to which the card application belongs, in other words, during subsequent card-swiping consumption of the user, fee deduction is performed from the bank card account already open in the bank to which the card application belongs. For example, according to the foregoing method provided in this example of this application, the terminal is bound with a card application of China Merchants Bank. If the terminal has previously opened an account in China Merchants Bank, an association relationship between the card application of China Merchants Bank and the open account of China Merchants Bank is established. Subsequently, when NFC payment is performed by using the card application that is of China Merchants Bank and that is bound to the terminal, fee deduction is performed from the open account of China Merchants Bank. (3) Each bound card application is associated with a card account that is newly opened during current card binding in an online manner for the card application by a bank to which the card application belongs, where the card account may be associated with an account of the to-be-verified bank card, so as to allow the user to transfer from the account of the to-be-verified bank card to the card account, so that the user can perform subsequent card-swiping consumption. For example, when the user binds a card application of China CITIC Bank and the card application of China Merchants Bank to the digital wallet APP of the terminal, a corresponding account is opened by a server of China CITIC Bank for the card application of China CITIC Bank in an online manner (different from a current manner of opening an account at a counter), and a corresponding account is opened by a server of China Merchants Bank for the card application of China Merchants Bank in an online manner. Subsequently, the user may transfer from the account of the to-be-verified bank card (for example, a debit card of Bank of China) to the two accounts. In this way, when the user performs card-swiping consumption by using the card application of China CITIC Bank, fee deduction may be performed from the account corresponding to the card application of China CITIC Bank, or when the user performs card-swiping consumption by using the card application of China Merchants Bank, fee deduction may be performed from the account corresponding to the card application of China Merchants Bank.

In addition to that the card application is applied to an NFC payment scenario, extension may be further performed according to a principle shown in the method provided in this example of this application, to apply the card application to a scenario in which a two-dimensional code is used for payment. Currently, a two-dimensional code payment function of the digital wallet supports only a bound bank card to generate a two-dimensional code corresponding to the bound bank card. For example, when a digital wallet APP is bound with two bank cards a bank card A and a bank card B, the bank card A may generate a two-dimensional code of the bank card A for a server to which the bank card A belongs to perform verification, the bank B may generate a two-dimensional code of the bank card B for a server to which the bank card B belongs to perform verification. When the two-dimensional code is used for payment, different stores may have different promotional activities for different bank cards. To enjoy promotion provided by each bank as much as possible, the user needs to bind bank cards as many as possible. In this case, the user also needs to enter information related to the bank cards one by one, in other words, there is also a problem of a relatively cumbersome card binding operation. Therefore, to simplify the card binding operation, in an example of this application, the user needs to bind only one bank card, and then request, by using information about the bound bank card, a two-dimensional code from another bank or data (such as a key seed) necessary for generating the two-dimensional code. For this two-dimensional code payment scenario, a solution provided in this example of this application is specifically as follows: (1) A bank card that is most suitable for this payment is determined, for example, a bank with a maximum promotion degree for this payment. Optionally, a bank with a maximum promotion degree is recommended based on current location information of the terminal, or a bank with a maximum promotion degree is recommended based on information about a store in which the user is currently located, or a bank with a maximum promotion degree is determined in another manner. (2) After authorization is performed by the user, information about the bank card bound to the digital wallet is used as the verification information of the to-be-verified bank card to send a request to a server of the bank determined in step (1), to request to generate a two-dimensional code corresponding to the bank or data necessary for generating the two-dimensional code corresponding to the bank. (3) The server of the determined bank delivers the two-dimensional code or related data necessary for generating the two-dimensional code, for example, a two-dimensional code key seed, to the terminal after verification performed on the verification information of the to-be-verified bank card succeeds. For the verification process, refer to the implementation shown in FIG. 3A and FIG. 3B, FIG. 4A and FIG. 4B, or FIG. 5A and FIG. 5B. (4) The terminal may generate a corresponding two-dimensional code based on the received related data. (5) After this step, the user may complete payment based on the two-dimensional code. For example, the user presents the two-dimensional code to a merchant for the merchant to scan the code, so as to complete fee deduction.

The foregoing mainly describes the solutions provided in the embodiments/examples of this application from a perspective of how the terminal and the digital wallet server complete the card binding process. It may be understood that, to implement the foregoing functions, the terminal and the digital wallet server include corresponding function modules for performing the functions. A person of ordinary skill in the art should easily be aware that, in combination with the examples described in the embodiments/examples disclosed in this specification, steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

Certainly, the terminal and the digital wallet server may be further divided based on the foregoing method examples. For example, each module or unit may be divided based on each function, or two or more functions may be integrated into one processing module. The foregoing integrated module may be implemented in a form of hardware, or may be implemented in a form of a software module or unit. In this embodiment/example of this application, module or unit division is an example, and is merely a logical function division. In actual implementation, another division manner may be used.

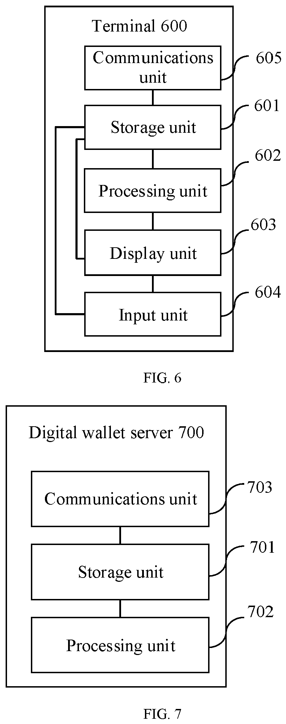

FIG. 6 is a possible schematic structural diagram of the terminal in the foregoing embodiments/examples. The terminal 600 includes a storage unit 601, a processing unit 602, a display unit 603, an input unit 604, and a communications unit 605.

The storage unit 601 is configured to store one or more pieces of program code. The processing unit 602 is configured to execute the program code stored in the storage unit 601, to perform step 304 and step 310 in FIG. 3A and FIG. 3B, step 408 in FIG. 4A, step 508 in FIG. 5A, and/or another process of the technology described in this specification. The display unit 603 is configured to display the screens shown in FIG. 2A-1 and FIG. 2A-2 to FIG. 2F. The input unit 604 is configured to implement interaction between a user and an electronic device and/or input information to a terminal. For example, the input unit may receive digital or character information entered by the user, to generate a signal input related to a user setting or function control. The input unit 604 is configured to receive an input operation performed by the user on the screens shown in FIG. 2A-1 and FIG. 2A-2 to FIG. 2F. The communications unit 605 is configured to perform communication between the terminal 600 and another device, for example, support the terminal in performing steps 301, 303, 305, and 309 in FIG. 3A and FIG. 3B, steps 401, 403, and 407 in FIG. 4A, step 501 and step 507 in FIG. 5A, and/or another process described in this specification.

Certainly, the terminal 600 includes but is not limited to the unit modules listed above, and functions that can be specifically implemented by the foregoing units also include but are not limited to functions corresponding to the method steps described in the foregoing embodiments/examples. For detailed descriptions of the units of the terminal 600, refer to detailed descriptions of the method steps corresponding to the units. Details are not described herein again in this embodiment/example of this application.

Optionally, the storage unit 601 may be included in the memory 103 in the terminal 100 for implementation, the processing unit 602 may be included in the processor 101 in the terminal 100 for implementation, the display unit 603 may be included in the display 104 in the terminal 100 for implementation, the communications unit 604 may be included in the radio frequency circuit 102 in the terminal 100 for implementation, and the input unit 604 may be included in the touchpad 104-1 in the terminal 100 for implementation. Certainly, in a specific implementation of this application, the input unit 604 may alternatively be another human-machine interaction interface, for example, a physical input key or a microphone, or may be another external information capturing apparatus, for example, one or more of a camera, a microphone, a physical keyboard, a function key, a trackball, a mouse, and a joystick.

FIG. 7 is a possible schematic structural diagram of the digital wallet server in the foregoing embodiments/examples. The digital wallet server 700 includes a storage unit 701, a processing unit 702, and a communications unit 703.

The storage unit 701 is configured to store one or more pieces of program code. The processing unit 702 is configured to execute the program code stored in the storage unit 701, to determine at least two bank cards to be displayed by a terminal and perform another process of the technology described in this specification. The communications unit 703 is configured to perform communication between the digital wallet server 700 and another device, for example, support the digital wallet server in performing steps 301, 302, 303, 305, 306, and 309 in FIG. 3A and FIG. 3B, and steps 401, 402, 403, and 407 in FIG. 4A and FIG. 4B, steps 501, 502, and 507 in FIG. 5A and FIG. 5B, and/or another process described in this specification.

Certainly, the digital wallet server 700 includes but is not limited to the unit modules listed above, and functions that can be specifically implemented by the foregoing units also include but are not limited to functions corresponding to the method steps described in the foregoing embodiments/examples. For detailed descriptions of the units of the digital wallet server 700, refer to detailed descriptions of the method steps corresponding to the units. Details are not described herein again in this embodiment/example of this application.

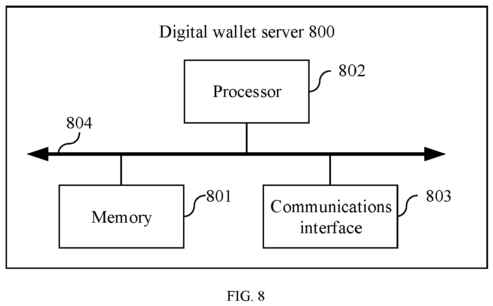

As shown in FIG. 8, the storage unit 701 may be a memory 801 in a digital wallet server 800. The memory 801 may include a volatile memory such as a random access memory; or the memory may include a nonvolatile memory such as a read-only memory, a flash memory, a hard disk, or a solid-state drive; or the memory may include a combination of the foregoing types of memories.

The processing unit 702 may be a controller or a processor 802 in the digital wallet server 800. The controller or the processor 802 may implement or execute various example logical blocks, modules, and circuits described with reference to content disclosed in this application. The processor or the controller may be a central processing unit, a general-purpose processor, a digital signal processor, an application-specific integrated circuit, a field programmable gate array or another programmable logic device, a transistor logic device, a hardware component, or any combination thereof. The processor 802 or the controller may implement or execute various example logical blocks, modules, and circuits described with reference to content disclosed in this application. Alternatively, the processor may be a combination of processors implementing a computing function, for example, a combination of one or more microprocessors.

The communications unit 703 may be a transceiver, a transceiver circuit, a communications interface 803, or the like in a base station.

The digital wallet server 800 further includes a bus 804. The bus 804 may be an extended industry standard architecture (Extended Industry Standard Architecture, EISA) bus or the like. The bus 804 may be classified into an address bus, a data bus, a control bus, and the like. For ease of representation, only one thick line is used to represent the bus in FIG. 8, but this does not mean that there is only one bus or only one type of bus.

The foregoing descriptions about implementations allow a person skilled in the art to clearly understand that, for the purpose of convenient and brief description, division of the foregoing function modules is used as an example for illustration. During actual application, the foregoing functions can be allocated to different function modules for completion according to a requirement, in other words, an internal structure of an apparatus is divided into different function modules, to implement all or some of the foregoing functions. For a detailed working process of the foregoing system, apparatus, and unit, refer to a corresponding process in the foregoing method embodiments/examples, and details are not described herein again.

In the several embodiments/examples provided in this application, it should be understood that the disclosed apparatus and method may be implemented in other manners. For example, the described apparatus embodiments/examples are merely examples. For example, the module or unit division is merely logical function division and may be other division during actual implementation. For example, a plurality of units or components may be combined or integrated into another system, or some features may be ignored or not performed. In addition, mutual couplings or direct couplings or communication connections between the units may be indirect couplings or communication connections by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments/examples.

In addition, functional units in the embodiments/examples of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, or a network device) to perform all or some of the steps of the methods described in the embodiments/examples of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A card binding method performed by a system comprising a terminal, a digital wallet server, a first bank server, and a second bank server, wherein the method comprises the following method steps:
**a.)** displaying, by the terminal, a first screen, wherein the first screen displays two bank cards associated with an account number with which a digital wallet application, APP, is currently logged in to, the two bank cards are bound to other terminals when the user logged in to the account number on the other terminals,
o wherein the two bank cards are displayed based upon historical card binding information received from the digital wallet server, wherein the historical card binding information is bank card information bound when the user logged in to the account number on the other terminals,
o wherein the digital wallet application is an application, which is installed in the terminal, and which is used to complete offline payment;
**b.)** determining, by the terminal, a to-be-verified bank card and a to-be-bound bank card from the two bank cards based on a selection of the user or according to a preset rule;
**c.)** displaying, by the terminal, a second screen, wherein the second screen is used to prompt a user to enter verification information of the to-be-verified bank card, wherein the user only needs to enter the verification information of the to-be-verified bank card to complete a binding of the to-be-bound bank card;
**d.)** sending (step 301), by the terminal, a first request to the digital wallet server, the first request being used to request the first bank server to perform a verification on the verification information of the to-be-verified bank card and used to request a delivery of a card application and personalization data of the to-be verified bank card to the terminal, wherein the first request carries the verification information, an identifier of the to-be-bound bank card, and an identifier of the to-be-verified bank card,
o wherein the verification information is used to determine at the first bank server whether the to-be-verified bank card is a valid card, and the verification information is a bank name, a card number, a registered mobile number, a withdrawal password, or a security question setting,
o wherein the personalization data of the to-be-verified bank card includes privacy data related to the card application of the to-be-verified bank card, and
o wherein the identifier of the to-be-bound bank card is used to identify the second bank server and the identifier of the to-be-verified bank card is used to identify the first bank server;
**e.)** sending (step 302), by the digital wallet server, based on the identifier of the to-be-verified bank card, a second request to the first bank server, the second request including the verification information, wherein the second request is used to request the first bank server to perform the verification on the verification information of the to-be-verified bank card and is used to request the delivery of the card application and the personalization data of the to-be-verified bank card to the terminal;
**f.)** performing, by the first bank server, the verification based on the verification information, and delivering (step 303), by the first bank server, the card application and the personalization data of the to-be-verified band card to the digital wallet server after the verification performed on the verification information succeeds, wherein the personalization data carry, as a part of the personalization data, a mutual trust credential generated by the first bank server;
**g.)** receiving (step 303), by the terminal, from the digital wallet server the card application and the personalization data of the to-be-verified bank card, and installing, by the terminal, the card application of the to-be-verified bank card in a secure area of the terminal, and binding (step 304), by the terminal, the to-be-verified bank card to the terminal based on the installed card application and the privacy data related to the card application of the to-be-verified bank card;
**h.)** after the binding of the to-be-verified bank card to the terminal is completed, sending (step 305), by the terminal, a third request to the digital wallet server, the third request being used to request the second bank server to deliver a card application and personalization data of the to-be-bound bank card to the terminal, wherein the third request includes the mutual trust credential, wherein the personalization data of the to-be-bound bank card includes privacy data related to the card application of the to-be-bound bank card;
**i.)** sending, by the digital wallet server, based on the identifier of the to-be-bound bank card, a fourth request to the second bank server, wherein the fourth request carries the mutual trust credential and the identifier of the to-be-verified bank card, wherein the fourth request is used to request the second bank server to deliver the card application and the personalization data of the to-be-bound band card;
**j.)** sending (step 307), by the second bank server, based on the identifier of the to-be-verified bank card, a fifth request to the first bank server, the fifth request containing the mutual trust credential and the fifth request is used to request a verification of the mutual trust credential contained in the fifth request;
**k.)** verifying, by the first bank server, the mutual trust credential contained in the fifth request by determining whether the mutual trust credential contained in the fifth request is the same as the mutual trust credential previously delivered to the digital wallet server, and if the verification succeeds, sending, by the first bank server, a verification success message of the successful verification of the mutual trust credential to the second bank server;
**l.)** after the reception of the verification success message, delivering, by the second bank server, the card application and the personalization data of the to-be-bound bank card to the digital wallet server;
**m.)** receiving (step 309), by the terminal, from the digital wallet server the card application and the personalization data of the to-be-bound bank card, and installing, by the terminal, the card application in the secure area of the terminal, and binding, by the terminal, the to-be-bound bank card to the terminal based on the installed card application and the privacy data related to the card application of the to-be-bound bank card.

2. The method according to claim 1, wherein before the displaying the first screen, the method further comprises:
o receiving, by the terminal, a trigger operation entered by the user by using the digital wallet APP, wherein the trigger operation comprises a login operation entered by the user on a login screen of the digital wallet APP, or an operation that is of adding the to-be-bound bank card and that is entered through a preset entry after the user successfully logs in to the digital wallet APP.

3. The method according to claim 1, wherein the determining the to-be-verified bank card and the to-be-bound bank card from the two bank cards comprises:
o determining the to-be-verified bank card and the to-be-bound bank card from the two bank cards based on a selection operation of the user; or
o determining the to-be-verified bank card and the to-be-bound bank card from the two bank cards according to a preset rule, wherein the preset rule comprises: determining that a bank card whose quantity of historical usage times is greater than a preset threshold is the to-be-verified bank card, or determining that any one of the two bank cards is the to-be-verified bank card.

4. The method according to any one of claims 1 to 3, wherein the method further comprises:
o displaying an installation progress of the card application of the to-be-bound bank card.

5. The method according to any one of claims 1 to 4, wherein before the two bank cards associated with the account number with which the digital wallet APP is currently logged in to are displayed, the method further comprises:
o determining the two bank cards associated with the account number with which the digital wallet APP is currently logged in to.

6. The method according to claim 5, wherein the determining the two bank cards associated with the account number with which the digital wallet APP is currently logged in to comprises:
∘ obtaining a first historical card binding record associated with the account number; and
o if a second historical card binding record associated with the account number is obtained, determining that bank cards corresponding to identifiers of card applications that are not comprised in the second historical card binding record, but are comprised in the first historical card binding record, are the two bank cards; or
if the second historical card binding record is not obtained, determining that bank cards corresponding to identifiers of card applications in the first historical card binding record are the two bank cards, wherein
the first historical card binding record comprises identifiers of all card applications associated with the account number, and the second historical card binding record comprises an identifier of a card application that is bound when the terminal is logged in to with the account number.

7. The method according to claim 6, wherein the obtaining the first historical card binding record associated with the account number comprises:
∘ obtaining the first historical card binding record from the digital wallet server.

8. The method according to claim 6, wherein the obtaining the second historical card binding record associated with the account number comprises:
o searching a locally stored list to obtain the second historical card binding record, wherein the list stores the identifier of the card application that is bound when the terminal is logged in to with the account number; or
∘ obtaining the second historical card binding record from the digital wallet server.

9. The method according to claim 5, wherein the determining the two bank cards associated with the account number with which the digital wallet APP is currently logged in to further comprises:
o receiving a third historical card binding record sent by the digtial wallet server, wherein the third historical card binding record comprises an identifier of a card application that is associated with the account number and that is not locally bound to the terminal; and
o determining that bank cards corresponding to identifiers of card applications in the third historical card binding record are the two bank cards.

10. The method according to claim 5, wherein the determining the two bank cards associated with the account number with which the digital wallet APP is currently logged in to further comprises:
o determining that all bank cards supported by the digital wallet APP are the two bank cards associated with the account number with which the digital wallet APP is currently logged in to.

11. A system comprising a terminal, a digital wallet server, a first bank server, and a second bank server, wherein the system is configured to perform any of the methods according to claims 1 - 10.

## Patentansprüche

1. Kartenverknüpfungsverfahren, durchgeführt durch ein System, das ein Endgerät, einen "Digital-Wallet"-Server, einen ersten Bank-Server und einen zweiten Bank-Server umfasst, wobei das Verfahren die folgenden Verfahrensschritte umfasst:
**a.)** Anzeigen, durch das Endgerät, eines ersten Bildschirms, wobei der erste Bildschirm zwei Bankkarten anzeigt, die mit einer Kontonummer assoziiert sind, mit der man derzeit in eine "Digital-Wallet"-Anwendung bzw. "Digital-Wallet"-APP eingeloggt ist, wobei die zwei Bankkarten mit anderen Endgeräten verknüpft werden, als sich der Benutzer auf den anderen Endgeräten in die Kontonummer einloggte,
o wobei die zwei Bankkarten basierend auf von dem "Digital-Wallet"-Server empfangenen historischen Kartenverknüpfungsinformationen angezeigt werden, wobei die historischen Kartenverknüpfungsinformationen Bankkarteninformationen sind, die verknüpft wurden, als sich der Benutzer auf den anderen Endgeräten in die Kontonummer einloggte,
o wobei die "Digital-Wallet"-Anwendung eine Anwendung ist, die in dem Endgerät installiert ist und die zum Abschließen von Offline-Zahlung verwendet wird,
**b.)** Bestimmen, durch das Endgerät, einer zu verifizierenden Bankkarte und einer zu verknüpfenden Bankkarte aus den zwei Bankkarten basierend auf einer Auswahl des Benutzers oder gemäß einer voreingestellten Regel;
**c.)** Anzeigen, durch das Endgerät, eines zweiten Bildschirms, wobei der zweite Bildschirm dazu verwendet wird, einen Benutzer dazu aufzufordern, Verifikationsinformationen der zu verifizierenden Bankkarte einzugeben, wobei der Benutzer nur die Verifikationsinformationen der zu verifizierenden Bankkarte eingeben muss, um eine Verknüpfung der zu verknüpfenden Bankkarte abzuschließen;
**d.)** Senden (Schritt 301), durch das Endgerät, einer ersten Anforderung an den "Digital-Wallet"-Server, wobei die erste Anforderung dazu verwendet wird, dem ersten Bank-Server dazu aufzufordern, eine Verifikation an den Verifikationsinformationen der zu verifizierenden Bankkarte durchzuführen und dazu verwendet wird, eine Lieferung einer Kartenanwendung und von Personalisierungsdaten der zu verifizierenden Bankkarte an das Endgerät anzufordern, wobei die erste Anforderung die Verifikationsinformationen, eine Kennung der zu verknüpfenden Bankkarte und eine Kennung der zu verifizierenden Bankkarte führt,
o wobei die Verifikationsinformationen dazu verwendet werden, an dem ersten Bank-Server zu bestimmen, ob die zu verifizierende Bankkarte eine gültige Karte ist, und es sich bei den Verifikationsinformationen um einen Banknamen, eine Kartennummer, eine registrierte Mobiltelefonnummer, ein Abhebungspasswort oder eine Einstellung einer Sicherheitsfrage handelt,
o wobei die Personalisierungsdaten der zu verifizierenden Bankkarte personenbezogene Daten im Zusammenhang mit der Kartenanwendung der zu verifizierenden Bankkarte beinhalten und
o wobei die Kennung der zu verknüpfenden Bankkarte zum Identifizieren des zweiten Bank-Servers verwendet wird und die Kennung der zu verifizierenden Bankkarte zum Identifizieren des ersten Bank-Servers verwendet wird;
**e.)** Senden (Schritt 302), durch den "Digital-Wallet"-Server, basierend auf der Kennung der zu verifizierenden Bankkarte, einer zweiten Anforderung an den ersten Bank-Server, wobei die zweite Anforderung die Verifikationsinformationen beinhaltet, wobei die zweite Anforderung dazu verwendet wird, den ersten Bank-Server dazu aufzufordern, die Verifikation an den Verifikationsinformationen der zu verifizierenden Bankkarte durchzuführen, und dazu verwendet wird, die Lieferung der Kartenanwendung und der Personalisierungsdaten der zu verifizieren Bankkarte an das Endgerät anzufordern;
**f.)** Durchführen, durch den ersten Bank-Server, der Verifikation basierend auf den Verifikationsinformationen und Liefern (Schritt 303), durch den ersten Bank-Server, der Kartenanwendung und der Personalisierungsdaten der zu verifizierenden Bankkarte an den "Digital-Wallet"-Server, nachdem die an den Verifikationsinformationen durchgeführte Verifikation erfolgreich ist, wobei die Personalisierungsdaten als Teil der Personalisierungsdaten eine durch den ersten Bank-Server erzeugte Anmeldeinformation zum gegenseitigen Vertrauen führen;
**g.)** Empfangen (Schritt 303), durch das Endgerät, von dem "Digital-Wallet"-Server, der Kartenanwendung und der Personalisierungsdaten der zu verifizierenden Bankkarte und Installieren, durch das Endgerät, der Kartenanwendung der zu verifizierenden Bankkarte in einem sicheren Bereich des Endgeräts und Verknüpfen (Schritt 304), durch das Endgerät, der zu verifizierenden Bankkarte mit dem Endgerät basierend auf der installierten Kartenanwendung und den personenbezogenen Daten im Zusammenhang mit der Kartenanwendung der zu verifizierenden Bankkarte;
**h.)** nach Abschluss des Verknüpfens der zu verifizierenden Bankkarte mit dem Endgerät, Senden (Schritt 305), durch das Endgerät, einer dritten Anforderung an den "Digital-Wallet"-Server, wobei die dritte Anforderung dazu verwendet wird, den zweiten Bank-Server dazu aufzufordern, eine Kartenanwendung und Personalisierungsdaten der zu verknüpfenden Bankkarte an das Endgerät zu liefern, wobei die dritte Anforderung die Anmeldeinformation zum gegenseitigen Vertrauen beinhaltet, wobei die Personalisierungsdaten der zu verknüpfenden Bankkarte personenbezogene Daten im Zusammenhang mit der Kartenanwendung der zu verknüpfenden Bankkarte beinhalten;
**i.)** Senden, durch den "Digital-Wallet"-Server, basierend auf der Kennung der zu verknüpfenden Bankkarte, einer vierten Anforderung an den zweiten Bank-Server, wobei die vierte Anforderung die Anmeldeinformation zum gegenseitigen Vertrauen und die Kennung der zu verifizierenden Bankkarte führt, wobei die vierte Anforderung dazu verwendet wird, den zweiten Bank-Server dazu aufzufordern, die Kartenanwendung und die Personalisierungsdaten der zu verknüpfenden Bankkarte zu liefern;
**j.)** Senden (Schritt 307), durch den zweiten Bank-Server, basierend auf der Kennung der zu verifizierenden Bankkarte, einer fünften Anforderung an den ersten Bank-Server, wobei die fünfte Anforderung die Anmeldeinformation zum gegenseitigen Vertrauen enthält und die fünfte Anforderung dazu verwendet wird, eine Verifikation der in der fünften Anforderung enthaltenen Anmeldeinformation zum gegenseitigen Vertrauen anzufordern;
**k.)** Verifizieren, durch den ersten Bank-Server, der in der fünften Anforderung enthaltenen Anmeldeinformation zum gegenseitigen Vertrauen durch Bestimmen, ob die in der fünften Anforderung enthaltene Anmeldeinformation zum gegenseitigen Vertrauen gleich der zuvor an den "Digital-Wallet"-Server gelieferten Anmeldeinformation zum gegenseitigen Vertrauen ist, und wenn die Verifikation erfolgreich ist, Senden, durch den ersten Bank-Server, einer Verifikationserfolgsnachricht der erfolgreichen Verifikation der Anmeldeinformation zum gegenseitigen Vertrauen an den zweiten Bank-Server;
**l.)** nach dem Empfang der Verifikationserfolgsnachricht, Liefern, durch den zweiten Bank-Server, der Kartenanwendung und der Personalisierungsdaten der zu verknüpfenden Bankkarte an den "Digital-Wallet"-Server;
**m.)** Empfangen (Schritt 309), durch das Endgerät, von dem "Digital-Wallet"-Server, der Kartenanwendung und der Personalisierungsdaten der zu verknüpfenden Bankkarte und Installieren, durch das Endgerät, der Kartenanwendung in dem sicheren Bereich des Endgeräts und Verknüpfen, durch das Endgerät, der zu verknüpfenden Bankkarte mit dem Endgerät basierend auf der installierten Kartenanwendung und den personenbezogenen Daten im Zusammenhang mit der Kartenanwendung der zu verknüpfenden Bankkarte.

2. Verfahren nach Anspruch 1, wobei das Verfahren vor dem Anzeigen des ersten Bildschirms ferner Folgendes umfasst:
o Empfangen, durch das Endgerät, einer durch den Benutzer unter Verwendung der "Digital-Wallet"-APP eingegebenen Auslöseoperation, wobei die Auslöseoperation eine durch den Benutzer auf einem Login-Bildschirm der "Digital-Wallet"-APP eingegebene Login-Operation oder eine Operation des Hinzufügens der zu verknüpfenden Bankkarte, die über einen voreingestellten Eintrag eingegeben wird, nachdem sich der Benutzer erfolgreich in die "Digital-Wallet"-APP einloggt, umfasst.

3. Verfahren nach Anspruch 1, wobei das Bestimmen der zu verifizierenden Bankkarte und der zu verknüpfenden Bankkarte aus den zwei Bankkarten Folgendes umfasst:
o Bestimmen der zu verifizierenden Bankkarte und der zu verknüpfenden Bankkarte aus den zwei Bankkarten basierend auf einer Auswahloperation des Benutzers; oder
o Bestimmen der zu verifizierenden Bankkarte und der zu verknüpfenden Bankkarte aus den zwei Bankkarten gemäß einer voreingestellten Regel, wobei die voreingestellte Regel Folgendes umfasst: Bestimmen, dass eine Bankkarte, deren Anzahl historischer Benutzungsvorgänge größer als eine voreingestellte Schwelle ist, die zu verifizierende Bankkarte ist, oder Bestimmen, dass eine beliebige der zwei Bankkarten die zu verifizierende Bankkarte ist.

4. Verfahren nach einem der Ansprüche 1 bis 3, wobei das Verfahren ferner Folgendes umfasst:
o Anzeigen eines Installationsfortschritts der Kartenanwendung der zu verknüpfenden Bankkarte.

5. Verfahren nach einem der Ansprüche 1 bis 4, wobei das Verfahren vor dem Anzeigen der zwei Bankkarten, die mit der Kontonummer assoziiert sind, mit der man derzeit in die "Digital-Wallet"-APP eingeloggt ist, ferner Folgendes umfasst:
o Bestimmen der zwei Bankkarten, die mit der Kontonummer assoziiert sind, mit der die "Digital-Wallet"-APP derzeit eingeloggt ist.

6. Verfahren nach Anspruch 5, wobei das Bestimmen der zwei Bankkarten, die mit der Kontonummer assoziiert sind, mit der man derzeit in die "Digital-Wallet"-APP eingeloggt ist, Folgendes umfasst:
o Erhalten einer ersten historischen Kartenverknüpfungsaufzeichnung, die mit der Kontonummer assoziiert ist; und
o wenn eine zweite historische Kartenverknüpfungsaufzeichnung, die mit der Kontonummer assoziiert ist, erhalten wird, Bestimmen, dass die Bankkarten, die Kennungen von Kartenanwendungen entsprechen, die nicht in der zweiten historischen Kartenverknüpfungsaufzeichnung enthalten sind, jedoch in der ersten historischen Kartenverknüpfungsaufzeichnung enthalten sind, die zwei Bankkarten sind; oder wenn die zweite historische Kartenverknüpfungsaufzeichnung nicht erhalten wird, Bestimmen, dass Bankkarten, die Kennungen von Kartenanwendungen in der ersten historischen Kartenverknüpfungsaufzeichnung entsprechen, die zwei Bankkarten sind, wobei
die erste historische Kartenverknüpfungsaufzeichnung Kennungen aller mit der Kontonummer assoziierten Kartenanwendungen umfasst und die zweite historische Kartenverknüpfungsaufzeichnung eine Kennung einer Kartenanwendung umfasst, die verknüpft wird, wenn sich mit der Kontonummer in das Endgerät eingeloggt wird.

7. Verfahren nach Anspruch 6, wobei das Erhalten der ersten historischen Kartenverknüpfungsaufzeichnung, die mit der Kontonummer assoziiert ist, Folgendes umfasst:
o Erhalten der ersten historischen Kartenverknüpfungsaufzeichnung von dem "Digital-Wallet"-Server.

8. Verfahren nach Anspruch 6, wobei das Erhalten der zweiten historischen Kartenverknüpfungsaufzeichnung, die mit der Kontonummer assoziiert ist, Folgendes umfasst:
o Durchsuchen einer lokal gespeicherten Liste, um die zweite historische Kartenverknüpfungsaufzeichnung zu erhalten, wobei die Liste die Kennung der Kartenanwendung speichert, die verknüpft wird, wenn sich mit der Kontonummer in das Endgerät eingeloggt wird; oder
o Erhalten der zweiten historischen Kartenverknüpfungsaufzeichnung von dem "Digital-Wallet"-Server.

9. Verfahren nach Anspruch 5, wobei das Bestimmen der zwei Bankkarten, die mit der Kontonummer assoziiert sind, mit der man derzeit in die "Digital-Wallet"-APP eingeloggt ist, Folgendes umfasst:
o Empfangen einer durch den "Digital-Wallet"-Server gesendeten dritten historischen Kartenverknüpfungsaufzeichnung, wobei die dritte historische Kartenverknüpfungsaufzeichnung eine Kennung einer Kartenanwendung umfasst, die mit der Kontonummer assoziiert ist und die nicht lokal mit dem Endgerät verknüpft ist; und
o Bestimmen, dass die Bankkarten, die Kennungen von Kartenanwendungen in der dritten historischen Kartenverknüpfungsaufzeichnung entsprechen, die zwei Bankkarten sind.

10. Verfahren nach Anspruch 5, wobei das Bestimmen der zwei Bankkarten, die mit der Kontonummer assoziiert sind, mit der man derzeit in die "Digital-Wallet"-APP eingeloggt ist, Folgendes umfasst:
o Bestimmen, dass alle durch die "Digital-Wallet"-APP unterstützten Bankkarten die zwei Bankkarten sind, die mit der Kontonummer assoziiert sind, mit der man derzeit in die "Digital-Wallet"-APP eingeloggt ist.

11. System, das ein Endgerät, einen "Digital-Wallet"-Server, einen ersten Bank-Server und einen zweiten Bank-Server umfasst, wobei das System zum Durchführen beliebiger der Verfahren nach den Ansprüchen 1-10 ausgelegt ist.

## Revendications

1. Procédé de rattachement de cartes réalisé par un système comportant un terminal, un serveur de portefeuille numérique, un premier serveur bancaire et un deuxième serveur bancaire, le procédé comportant les étapes de procédé suivantes :
**a.)** affichage, par le terminal, d'un premier écran, le premier écran affichant deux cartes bancaires associées à un numéro de compte avec lequel une application, APP, de portefeuille numérique fait actuellement l'objet d'une connexion, les deux cartes bancaires étant rattachées à d'autres terminaux lorsque l'utilisateur s'est connecté au numéro de compte sur les autres terminaux,
• les deux cartes bancaires étant affichées sur la base d'informations historiques de rattachement de cartes reçues en provenance du serveur de portefeuille numérique, les informations historiques de rattachement de cartes étant des informations de carte bancaire rattachées lorsque l'utilisateur s'est connecté au numéro de compte sur les autres terminaux,
• l'application de portefeuille numérique étant une application qui est installée dans le terminal, et qui est utilisée pour accomplir un paiement hors ligne ;
**b.)** détermination, par le terminal, d'une carte bancaire à authentifier et d'une carte bancaire à rattacher parmi les deux cartes bancaires d'après une sélection de l'utilisateur ou selon une règle préétablie ;
**c.)** affichage, par le terminal, d'un deuxième écran, le deuxième écran étant utilisé pour inviter un utilisateur à saisir des informations d'authentification de la carte bancaire à authentifier, l'utilisateur n'ayant qu'à saisir les informations d'authentification de la carte bancaire à authentifier pour achever un rattachement de la carte bancaire à rattacher ;
**d.)** envoi (étape 301), par le terminal, d'une première demande au serveur de portefeuille numérique, la première demande étant utilisée pour demander au premier serveur bancaire d'effectuer une authentification sur les informations d'authentification de la carte bancaire à authentifier et utilisée pour demander la remise d'une application de carte et de données de personnalisation de la carte bancaire à authentifier au terminal, la première demande transportant les informations d'authentification, un identifiant de la carte bancaire à rattacher, et un identifiant de la carte bancaire à authentifier,
• les informations d'authentification étant utilisées pour déterminer, au niveau du premier serveur bancaire, si la carte bancaire à authentifier est une carte valide, et les informations d'authentification étant un nom de banque, un numéro de carte, un numéro de mobile inscrit, un mot de passe de retrait, ou un paramétrage de question de sécurité,
• les données de personnalisation de la carte bancaire à authentifier comprenant des données de confidentialité liées à l'application de carte de la carte bancaire à authentifier, et
• l'identifiant de la carte bancaire à rattacher étant utilisé pour identifier le deuxième serveur bancaire et l'identifiant de la carte bancaire à authentifier étant utilisé pour identifier le premier serveur bancaire ;
**e.)** envoi (étape 302), par le serveur de portefeuille numérique, d'après l'identifiant de la carte bancaire à authentifier, d'une deuxième demande au premier serveur bancaire, la deuxième demande incluant les informations d'authentification, la deuxième demande étant utilisée pour demander au premier serveur bancaire d'effectuer l'authentification sur les informations d'authentification de la carte bancaire à authentifier et étant utilisée pour demander la remise de l'application de carte et des données de personnalisation de la carte bancaire à authentifier au terminal ;
**f.)** réalisation, par le premier serveur bancaire, de l'authentification d'après les informations d'authentification, et remise (étape 303), par le premier serveur bancaire, de l'application de carte et des données de personnalisation de la carte bancaire à authentifier au serveur de portefeuille numérique après que l'authentification effectuée sur les informations d'authentification a réussi, les données de personnalisation transportant, en tant que partie des données de personnalisation, un justificatif de confiance mutuelle généré par le premier serveur bancaire ;
**g.)** réception (étape 303), par le terminal, en provenance du serveur de portefeuille numérique, de l'application de carte et des données de personnalisation de la carte bancaire à authentifier, et installation, par le terminal, de l'application de carte de la carte bancaire à authentifier dans une zone sécurisée du terminal, et rattachement (étape 304), par le terminal, de la carte bancaire à authentifier au terminal d'après l'application installée de carte et les données de confidentialité liées à l'application de carte de la carte bancaire à authentifier ;
**h.)** après que le rattachement de la carte bancaire à authentifier au terminal a été achevé, envoi (étape 305), par le terminal, d'une troisième demande au serveur de portefeuille numérique, la troisième demande étant utilisée pour demander au deuxième serveur bancaire de remettre une application de carte et des données de personnalisation de la carte bancaire à rattacher au terminal, la troisième demande comprenant le justificatif de confiance mutuelle, les données de personnalisation de la carte bancaire à rattacher comprenant des données de confidentialité liées à l'application de carte de la carte bancaire à rattacher ;
**i.)** envoi, par le serveur de portefeuille numérique, d'après l'identifiant de la carte bancaire à rattacher, d'une quatrième demande au deuxième serveur bancaire, la quatrième demande transportant le justificatif de confiance mutuelle et l'identifiant de la carte bancaire à authentifier, la quatrième demande étant utilisée pour demander au deuxième serveur bancaire de remettre l'application de carte et les données de personnalisation de la carte bancaire à rattacher ;
**j.)** envoi (étape 307), par le deuxième serveur bancaire, d'après l'identifiant de la carte bancaire à authentifier, d'une cinquième demande au premier serveur bancaire, la cinquième demande contenant le justificatif de confiance mutuelle et la cinquième demande étant utilisée pour demander une authentification du justificatif de confiance mutuelle contenu dans la cinquième demande ;
**k.)** authentification, par le premier serveur bancaire, du justificatif de confiance mutuelle contenu dans la cinquième demande en déterminant si le justificatif de confiance mutuelle contenu dans la cinquième demande est le même que le justificatif de confiance mutuelle remis précédemment au serveur de portefeuille numérique, et si l'authentification réussit, envoi, par le premier serveur bancaire, d'un message de réussite d'authentification de l'authentification réussie du justificatif de confiance mutuelle au deuxième serveur bancaire ;
**l.)** après la réception du message de réussite d'authentification, remise, par le deuxième serveur bancaire, de l'application de carte et des données de personnalisation de la carte bancaire à rattacher au serveur de portefeuille numérique ;
**m.)** réception (étape 309), par le terminal, en provenance du serveur de portefeuille numérique, de l'application de carte et des données de personnalisation de la carte bancaire à rattacher, et installation, par le terminal, de l'application de carte dans la zone sécurisée du terminal, et rattachement, par le terminal, de la carte bancaire à rattacher au terminal sur la base de l'application de carte installée et des données de confidentialité liées à l'application de carte de la carte bancaire à rattacher.

2. Procédé selon la revendication 1, le procédé comportant en outre, avant l'affichage du premier écran :
• la réception, par le terminal, d'une opération de déclenchement saisie par l'utilisateur en utilisant l'APP de portefeuille numérique, l'opération de déclenchement comportant une opération de connexion saisie par l'utilisateur sur un écran de connexion de l'APP de portefeuille numérique, ou une opération qui consiste à ajouter la carte bancaire à rattacher et qui est saisie par l'intermédiaire d'une saisie préétablie après que l'utilisateur s'est connecté avec succès à l'APP de portefeuille numérique.

3. Procédé selon la revendication 1, la détermination de la carte bancaire à authentifier et de la carte bancaire à rattacher parmi les deux cartes bancaires comportant :
• la détermination de la carte bancaire à authentifier et de la carte bancaire à rattacher parmi les deux cartes bancaires d'après une opération de sélection de l'utilisateur ; ou
• la détermination de la carte bancaire à authentifier et de la carte bancaire à rattacher parmi les deux cartes bancaires selon une règle préétablie, la règle préétablie comportant : le fait de déterminer qu'une carte bancaire dont la quantité d'occurrences historiques d'utilisation est supérieure à un seuil préétabli est la carte bancaire à authentifier, ou le fait de déterminer que l'une quelconque des deux cartes bancaires est la carte bancaire à authentifier.

4. Procédé selon l'une quelconque des revendications 1 à 3, le procédé comportant en outre :
• l'affichage d'un avancement d'installation de l'application de carte de la carte bancaire à rattacher.

5. Procédé selon l'une quelconque des revendications 1 à 4, le procédé comportant en outre, avant que les deux cartes bancaires associées au numéro de compte avec lequel l'APP de portefeuille numérique fait actuellement l'objet d'une connexion soient affichées :
• la détermination des deux cartes bancaires associées au numéro de compte avec lequel l'APP de portefeuille numérique fait actuellement l'objet d'une connexion.

6. Procédé selon la revendication 5, la détermination des deux cartes bancaires associées au numéro de compte avec lequel l'APP de portefeuille numérique fait actuellement l'objet d'une connexion comportant les étapes consistant à :
• obtenir un premier enregistrement historique de rattachement de cartes associé au numéro de compte ; et
• si un deuxième enregistrement historique de rattachement de cartes associé au numéro de compte est obtenu, déterminer que des cartes bancaires correspondant à des identifiants d'applications de cartes qui ne sont pas compris dans le deuxième enregistrement historique de rattachement de cartes, mais sont compris dans le premier enregistrement historique de rattachement de cartes, sont les deux cartes bancaires ; ou
si le deuxième enregistrement historique de rattachement de cartes n'est pas obtenu, déterminer que des cartes bancaires correspondant à des identifiants d'applications de cartes dans le premier enregistrement historique de rattachement de cartes sont les deux cartes bancaires, le premier enregistrement historique de rattachement de cartes comportant des identifiants de toutes les applications de cartes associées au numéro de compte, et le deuxième enregistrement historique de rattachement de cartes comportant un identifiant d'une application de carte qui est rattachée lorsqu'on se connecte au terminal avec le numéro de compte.

7. Procédé selon la revendication 6, l'obtention du premier enregistrement historique de rattachement de cartes associé au numéro de compte comportant :
• l'obtention du premier enregistrement historique de rattachement de cartes à partir du serveur de portefeuille numérique.

8. Procédé selon la revendication 6, l'obtention du deuxième enregistrement historique de rattachement de cartes associé au numéro de compte comportant :
• une recherche dans une liste stockée localement pour obtenir le deuxième enregistrement historique de rattachement de cartes, la liste conservant l'identifiant de l'application de carte qui est rattachée lorsqu'on se connecte au terminal avec le numéro de compte ; ou
• l'obtention du deuxième enregistrement historique de rattachement de cartes à partir du serveur de portefeuille numérique.

9. Procédé selon la revendication 5, la détermination des deux cartes bancaires associées au numéro de compte avec lequel l'APP de portefeuille numérique fait actuellement l'objet d'une connexion comportant en outre :
• la réception d'un troisième enregistrement historique de rattachement de cartes émis par le serveur de portefeuille numérique, le troisième enregistrement historique de rattachement de cartes comportant un identifiant d'une application de carte qui est associée au numéro de compte et qui n'est pas rattachée localement au terminal ; et
• la détermination du fait que des cartes bancaires correspondant à des identifiants d'applications de cartes dans le troisième enregistrement historique de rattachement de cartes sont les deux cartes bancaires.

10. Procédé selon la revendication 5, la détermination des deux cartes bancaires associées au numéro de compte avec lequel l'APP de portefeuille numérique fait actuellement l'objet d'une connexion comportant en outre :
• la détermination du fait que toutes les cartes bancaires prises en charge par l'APP de portefeuille numérique sont les deux cartes bancaires associées au numéro de compte avec lequel l'APP de portefeuille numérique fait actuellement l'objet d'une connexion.

11. Système comportant un terminal, un serveur de portefeuille numérique, un premier serveur bancaire, et un deuxième serveur bancaire, le système étant configuré pour réaliser l'un quelconque des procédés selon les revendications 1 à 10.
